# EUROPÄISCHE PATENTSCHRIFT

(11) **EP 3 590 812 B1**
(45) Veröffentlichungstag und Bekanntmachung des Hinweises auf die Patenterteilung: **07.09.2022**
(21) Anmeldenummer: 19184336.6
(22) Anmeldetag: 04.07.2019
(51) Int. Cl.: B62M 6/50, B62J 45/413, B62J 45/423, G01P 3/481, G01P 21/02, B62L 1/00

(54) **INKREMENTELLES MESSWEGESYSTEM FÜR EIN FAHRRAD, FAHRRAD, SIGNALGEBERMITTEL UND HERSTELLUNGSVERFAHREN**
INCREMENTAL MEASUREMENT SYSTEM FOR A BICYCLE, BICYCLE, SIGNAL GENERATOR MEANS AND FABRICATION METHOD
SYSTÈME DE MESURE INCRÉMENTAL POUR UNE BICYCLETTE, BICYCLETTE, MOYEN ÉMETTEUR DE SIGNAL ET PROCÉDÉ DE FABRICATION

(30) Priorität: 05.07.2018 EP 18181933; 06.07.2018 EP 18182236
(43) Veröffentlichungstag der Anmeldung: 08.01.2020
(73) Patentinhaber: Winora-Staiger GmbH, 97526 Sennfeld (DE)
(72) Erfinder: Beutner, Ingo, 97737 Gemünden (DE)
(74) Vertreter: V.O.

(56) Entgegenhaltungen:
- WO-A1-2013/046472
- DE-A1-102015 120 656
- DE-A1-102017 115 157
- FR-A1- 2 526 953

## Beschreibung

Vorliegende Erfindung betrifft ein inkrementelles Messwegesystem für ein Fahrrad, zur Ermittlung einer Rotationsgeschwindigkeit eines Rades des Fahrrades relativ zu einem Fixpunkt am Fahrrad, beispielsweise einer Gabel und/oder einem Rahmen, umfassend wenigstens ein Signalgebermittel mit einer Mehrzahl an Signalgebern, und wenigstens ein mit diesen Signalgebern kooperierendes Sensormittel, wobei das Signalgebermittel am Rad und das Sensormittel am Fixpunkt, oder umgekehrt, derart anordbar sind, dass bei einer Rotation des Rades die Signalgeber zur Abtastung wenigstens einer Signalstrecke und Bildung wenigstens eines abgreifbaren Messsignals am Sensorelement vorbeirotieren.

Messsysteme für ein Fahrrad zur Ermittlung einer Rotationsgeschwindigkeit eines Rades dieses Fahrrads sind aus dem Stand der Technik bekannt. Unterschiedliche Ausführungsformen werden angeboten. So gibt es mechanische Systeme, die über eine mechanische Kopplung zwischen einer rotierenden Radachse und der Gabel ein mechanisches Drehzahlsignal an eine Tachoeinheit weiterleiten, woraus in Kombination mit dem verwendeten Radumfang des Rades eine Geschwindigkeit ermittelt werden kann. Zudem sind Systeme bekannt, die über magnetische Signalgeber einem Sensormittel die Detektion der Rotationsgeschwindigkeit eines Rades erlauben, woraufhin wieder ein Geschwindigkeitssignal ermittelt werden kann. Aus dem Bereich der ABS-Systeme sind Konstruktionen bekannt, bei denen über insbesondere optische Sensoren eine Abtastung eines Messrings erfolgt, der zusammen mit einem Rad und insbesondere koaxial zu diesem rotiert. Über Aussparungen im Messring kann so eine Bewegung des Messrings und des damit gekoppelten Rades detektiert werden.

Es hat sich jedoch herausgestellt, dass alle diese Systeme sehr einfach manipuliert werden können. Eine Manipulation kann insbesondere bei E-Bikes beispielsweise dazu führen, dass einem E-Bike-Controller eine reduzierte Geschwindigkeit suggeriert wird, obwohl das Rad sich tatsächlich mit höherer Geschwindigkeit bewegt. Dies ist in vielen Fällen gesetzlich unzulässig. Darüber hinaus hat sich herausgestellt, dass viele aus dem Stand der Technik bekannte Systeme in ihrer Detektion fehleranfällig sind.

Die WO 2013/046472 A1 beschreibt eine Sensordisk, die an einer Kurbel eines Fahrrades befestigt wird und die Winkeldetektion der Kurbel erlauben soll. Dazu sind unterschiedliche Magnete und auch ein Referenzmagnet vorhanden, der die Nulllage der Kurbel identifizierbar machen soll. Zur Detektion der Rotationsgeschwindigkeit der Kurbel wird eine Kadenzsensor verwendet.

Die gattungsgemäße FR 2 526 953 A1 beschreibt einen Zahnring, bei dem Zähne mit einem Sensor abgetastet und zur Messung der Geschwindigkeit verwendet werden sollen. Erwähnt ist hier, dass bei einer hohen Zahnanzahl und Umdrehungsgeschwindigkeit eine Verschiebung des Nulldurchgangs bei der Detektion auftritt, was das Messergebnis verfälscht. Eine Lösung sei es, eine Metallplatte in einem Bereich anzuordnen, in dem einige Zähne entfernt wurden. Diese Metallplatte ist etwas tiefer angeordnet als das Zahnniveau.

Aufgabe der vorliegenden Erfindung ist es folglich, ein inkrementelles Messwegesystem für ein Fahrrad zur Ermittlung einer Rotationsgeschwindigkeit eines Rades des Fahrrads relativ zu einem Fixpunkt am Fahrrad bereitzustellen, das die aus dem Stand der Technik bekannten Nachteile beseitigt und insbesondere ein genaue und nur schwer manipulierbare Detektion erlaubt.

Diese Aufgabe wird durch ein inkrementelles Messwegesystem gemäß Anspruch 1, ein Signalgebermittel gemäß Anspruch 15, ein Verfahren zur Herstellung eines Signalgebermittels gemäß Anspruch 16 und ein Fahrrad gemäß Anspruch 17 gelöst.

Insbesondere wird diese Aufgabe gelöst durch ein inkrementelles Messwegesystem für ein Fahrrad, zur Ermittlung einer Rotationsgeschwindigkeit eines Rades des Fahrrades relativ zu einem Fixpunkt am Fahrrad, beispielsweise einer Gabel und/oder einem Rahmen, umfassend wenigstens ein Signalgebermittel mit einer Mehrzahl an Signalgebern, und wenigstens ein mit diesen Signalgebern kooperierendes Sensorelement, wobei das Signalgebermittel am Rad und das Sensorelement am Fixpunkt, oder umgekehrt, derart anordbar sind, dass bei einer Rotation des Rades die Signalgeber zur Abtastung wenigstens einer Signalstrecke und Bildung wenigstens eines abgreifbaren Messsignals am Sensorelement vorbeirotieren, wobei die Signalgeber in einer Signalgeberebene Es angeordnet sind, und wenigstens einer der Signalgeber, optional genau einer der Signalgeber, als Eichelement ausgebildet ist, umfassend wenigstens eine Signalstrecke, die von den Signalstrecken der anderen Signalgeber abweichend ausgebildet ist, wobei jeder Signalgeber eine vorauslaufende Kante und eine nachlaufende Kante aufweist, wobei die vorauslaufende Kante den Beginn der Signalstrecke und die nachlaufende Kante das Ende der Signalstrecke des Signalgebers definiert, wobei jeder Signalgeber im Bereich seiner Signalstrecke zwischen der vorauslaufenden Kante und der nachlaufenden Kante opak ausgebildet ist, wobei die Signalgeber auf einer Signalgeberbasis angeordnet sind, die eine Achse Aₓ umfasst, die derart anordbar ist, dass sie co-axial zur Rotationsachse des Rades verläuft, und wobei die Signalstrecke des Eichelementes kürzer oder länger ist als die Signalstrecken der anderen Signalgeber, wobei die nachlaufende Kante jedes einzelnen Signalgebers von der vorauslaufenden Kante des darauf in einer Umfangsrichtung der Signalgeberbasis folgenden Signalgebers in der Umfangsrichtung der Signalgeberbasis beabstandet ist, so dass sämtliche einzelne Signalgeber in der Umfangsrichtung der Signalgeberbasis voneinander beabstandet sind, wobei, aus der Detektion der Signalstrecke des Eichelementes durch das Sensorelement, ein verlässlicher Rückschluss auf die tatsächliche Rotationsgeschwindigkeit des Rades und ein sicherer Manipulationsschutz resultiert.

Darüber hinaus wird diese Aufgabe insbesondere auch gelöst durch ein Fahrrad, umfassend einen Fahrradrahmen, wenigstens ein an diesem Fahrradrahmen rotierbar gelagertes Rad und ein inkrementelles Messwegesystem, wie es hier beschrieben ist.

Darüber hinaus wird diese Aufgabe gelöst durch ein Signalgebermittel für ein inkrementelles Messwegesystem wie es hier beschrieben ist, mit einer Mehrzahl an Signalgebern, wobei das Signalgebermittel an einem Rad eines Fahrrades oder einem Fixpunkt am Fahrrad derart anordbar ist, dass bei einer Rotation des Rades die Signalgeber zur Abtastung wenigstens einer Signalstrecke und Bildung wenigstens eines abgreifbaren Messsignals an einem Sensorelement am Fahrrad vorbeirotieren, wobei die Signalgeber in einer Signalgeberebene Es angeordnet sind, und wenigstens einer der Signalgeber, optional genau einer der Signalgeber, als Eichelement ausgebildet ist, umfassend wenigstens eine Signalstrecke die von den Signalstrecken der anderen Signalgeber abweichend ausgebildet ist, wobei jeder Signalgeber eine vorauslaufende Kante und eine nachlaufende Kante aufweist, wobei die vorauslaufende Kante den Beginn der Signalstrecke und die nachlaufende Kante das Ende der Signalstrecke des Signalgebers definiert, wobei jeder Signalgeber im Bereich seiner Signalstrecke zwischen der vorauslaufenden Kante und der nachlaufenden Kante opak ausgebildet ist, wobei die Signalgeber auf einer Signalgeberbasis angeordnet sind, die eine Achse Aₓ umfasst, die derart anordbar ist, dass sie coaxial zur Rotationsachse des Rades verläuft, und wobei die Signalstrecke des Eichelementes kürzer oder länger ist als die Signalstrecken der anderen Signalgeber, wobei die nachlaufende Kante jedes einzelnen Signalgebers von der vorauslaufenden Kante des darauf in einer Umfangsrichtung der Signalgeberbasis folgenden Signalgebers in der Umfangsrichtung der Signalgeberbasis beabstandet ist, so dass sämtliche einzelnen Signalgeber in der Umfangsrichtung der Signalgeberbasis voneinander beabstandet sind, wobei, aus der Detektion der Signalstrecke des Eichelementes durch das Sensorelement, ein verlässlicher Rückschluss auf die tatsächliche Rotationsgeschwindigkeit des Rades und ein sicherer Manipulationsschutz resultiert.

Zudem wird diese Aufgabe gelöst durch ein Verfahren zur Herstellung eines Signalgebermittels für ein inkrementelles Messwegesystem, wie es hier beschrieben ist, umfassend die folgenden Schritte: Bereitstellen einer Signalgeberbasis; Ausbilden und insbesondere Einprägen einer Mehrzahl an Signalgebern in die Signalgeberbasis, jeweils umfassend wenigstens eine von einem Sensorelement abtastbare Signalstrecke, wobei wenigstens einer der Signalgeber, optional genau einer der Signalgeber, als Eichelement ausgebildet wird, umfassend wenigstens eine Signalstrecke die von den Signalstrecken der anderen Signalgeber abweichend ausgebildet ist, wobei jeder Signalgeber eine vorauslaufende Kante und eine nachlaufende Kante aufweist, wobei die vorauslaufende Kante den Beginn der Signalstrecke und die nachlaufende Kante das Ende der Signalstrecke des Signalgebers definiert, wobei jeder Signalgeber im Bereich seiner Signalstrecke zwischen der vorauslaufenden Kante und der nachlaufenden Kante opak ausgebildet ist, wobei die Signalgeber auf der Signalgeberbasis angeordnet sind, die eine Achse Aₓ umfasst, die derart anordbar ist, dass sie coaxial zur Rotationsachse eines Rades eines Fahrrades verläuft, wobei die Signalstrecke des Eichelementes kürzer oder länger ist als die Signalstrecken der anderen Signalgeber, wobei die nachlaufende Kante jedes einzelnen Signalgebers von der vorauslaufenden Kante des darauf in einer Umfangsrichtung der Signalgeberbasis folgenden Signalgebers in der Umfangsrichtung der Signalgeberbasis beabstandet ist, so dass sämtliche einzelnen Signalgeber in der Umfangsrichtung der Signalgeberbasis voneinander beabstandet sind, und wobei, aus der Detektion der Signalstrecke des Eichelementes durch das Sensorelement, ein verlässlicher Rückschluss auf die tatsächliche Rotationsgeschwindigkeit des Rades und ein sicherer Manipulationsschutz resultiert.

Ein wesentlicher Punkt der Erfindung ist die Bereitstellung einer Mehrzahl an Signalgebern, wobei wenigstens ein und vorteilhafterweise genau ein Signalgeber als Eichelement ausgebildet ist. Erlaubt die Detektion der einzelnen Signalgeberstrecken der "normalen" Signalgeber beispielsweise die Bestimmung einer Rotationsgeschwindigkeit des Rades, in dem die Signalgeber am Sensorelement vorbeirotieren, ermöglicht die Detektion des als Eichelement ausgebildeten Signalgeber bzw. der Signalstrecke des Eichelements einen verlässlichen Rückschluss auf die tatsächliche Rotationsgeschwindigkeit und insbesondere einen sehr sicheren Manipulationsschutz.

In diesem Zusammenhang sind mehrere Ausführungsformen denkbar.

So ist beispielsweise bei der Ausführung genau eines Eichelements innerhalb der Mehrzahl an Signalgebern gewährleistet, dass jeweils verlässlich eine Vollrotation des Rades detektiert werden kann. Auf diese Weise ist eine Manipulation des Messsignals und eine verfälschte Weitergabe beispielsweise an einen Signalnehmer, einer Tachoeinheit etc. oder einer ähnlichen Steuereinheit nahezu ausgeschlossen. Bei jeder Vollrotation wird das genau eine Eichelement verlässlich detektiert und so ein Rückschluss auf eine Vollrotation des Rades gewährleistet. Bei jeder Vollrotation erfolgt optional also ein Eichschritt.

Optional sind bestimmte Abschnitte auf der Signalgeberbasis von Zwischenräumen getrennt auf der Signalgeberbasis angeordnet. Es ist optional denkbar diese Zwischenräume mit Signalstrecken zu versehen und diese so zu detektieren. Diese Zwischenräume können also die erfindungsgemäßen Signalgeber mit Signalgeberstrecken umfassen.

Die Signalgeber sind erfindungsgemäß auf einer Signalgeberbasis und insbesondere einem Messring angeordnet. Diese Signalgeberbasis und insbesondere der Messring ist optional so ausgebildet, dass die Signalgeber wenigstens abschnittsweise rotationssymmetrisch um eine Zentralachse angeordnet sind. Diese Zentralachse verläuft koaxial zur Rotationsachse des Rades.

Insbesondere in diesem Zusammenhang sei erwähnt, dass der Messring beispielsweise koaxial zur Rotationsachse des Rades am Rad befestigt sein kann. Es ist auch möglich, den Messring an einer Bremsscheibe zu befestigen. Auch ist es denkbar, den Messring in die Bremsscheibe zu integrieren. Es ist denkbar, den Messring lösbar an der Bremsscheibe zu befestigen. Auch ist es denkbar, den Messring in ein Speichen- oder dergleichen Felgenstützsystem zu integrieren. Es ist auch denkbar, die Signalgeber in das System und insbesondere in entsprechende Speichen zu integrieren, beispielsweise breitere Speichen, farbige Speichen etc zu verwenden, die dann als einzelne Signalgeber fungieren können. Es ist denkbar, das Signalgebermittel und insbesondere die Signalgeberbasis oder einen entsprechend ausgebildeten Messring am Rad zu montieren. Es ist auch denkbar, das Signalgebermittel an einem Fixpunkt am Fahrrad und insbesondere an einer Gabel oder einem ausfallenden hinteren Teil eines Fahrradrahmens zu montieren und dann korrespondierend das Sensorelement rotierend am korrespondierenden Rad zu montieren. Sämtliche hier genannten Ausführungsformen sind auf diese Anordnung übertragbar und mit umfasst.

Der Messring kann als Vollring, aber auch nur als Ringsegment mit wenigstens einem Zwischenraum oder Spalt ausgebildet sein, muss also keine 360° umlaufen. Der Messring kann auch aus einer Mehrzahl an Messringelementen bestehen, die zu einem Messring bzw. einem Messteilring, insbesondere mit oder ohne Zwischenräume anordbar sind. Wenigstens ein Zwischenraum oder Spalt kann optional als Signalgeber und insbesondere als Eichelement fungieren.

Jedem Signalgeber ist wenigstens eine Signalstrecke zugeordnet, die von dem wenigstens einen Sensorelement detektierbar ist. Hier sind alle möglichen Arten von Signalstrecken verwendbar, die an das verwendete Sensorelement adaptiert sind.

Optional sind wenigstens ein Signalgeber, und insbesondere alle Signalgeber, und das Sensorelement in Kombination als Näherungsschalter ausgebildet, und insbesondere als Näherungsschalter aus der Gruppe umfassend induktive Näherungsschalter, kapazitive Näherungsschalter, magnetische Näherungsschalter, optische Näherungsschalter, Lichtschranken oder Ultraschallnäherungsschalter. Im Prinzip können also Näherungsschalter verwendet werden, bei denen wenigstens ein Signalgeber ferromagnetisch ausgebildet sein kann. Es können auch Näherungsschalter verwendet werden, bei denen wenigstens ein Signalgeber nicht magnetisch und insbesondere aus nicht magnetischem Metall ausgebildet sein kann. Es ist auch denkbar, die Signalgeber derart auszubilden, dass bei Annäherung an das Sensorelement sich die Schwingfrequenz ein Näherungsschalter-Schwingkreis verändert. Dies ist insbesondere bei kapazitiven Näherungsschaltern der Fall. Insbesondere im Bereich der magnetischen Näherungsschalter können z. B. Reedschalter, Reedkontakte, Reedrelais oder Hallsensoren ihre Anwendung finden. Es ist denkbar, die Signalgeber magnetisch auszubilden. Insbesondere in Bezug auf optische Näherungsschalter sind Sensorelemente denkbar, die auf Lichtreflexion reagieren.

Optional weist das Sensormittel wenigstens einen Sensor aus der Gruppe der Hallsensoren, optischen Sensoren, optoelektrischen Sensoren, induktiven Sensoren, kapazitiven Sensoren, Magnetsensoren, Ultraschallsensoren auf. Optional ist die wenigstens eine Signalstrecke des Eichelements unter den anderen Signalstrecken eindeutig identifizierbar ausgebildet. Dies kann auf unterschiedliche Art und Weise erfolgen. Hier sind Farbcodierungen, geometrische Codierungen, magnetische Codierungen, elektrische Codierungen, Materialunterschiedscodierungen etc. verwendbar.

Optional sind die Signalstrecken der anderen Signalgeber identisch, insbesondere derart, dass sich die Signalstrecke des Eichelements klar von diesen anderen Signalstrecken abgrenzt.

Erfindungsgemäß ist die Signalstrecke des Eichelements kürzer oder länger ausgebildet als die Signalstrecke der anderen Signalgeber. Dies ist beispielsweise möglich, indem in Rotationsumfangrichtung eine längere Signalstrecke oder eine kürzere Signalstrecke des Eichelements vom Sensorelement abgetastet wird. Es ist auch denkbar, den Signalgeber so auszubilden, dass er ein stärkeres oder schwächeres Signal ergibt, und so eine Detektion des Eichelements möglich ist.

Jeder Signalgeber weist eine vorauslaufende Kante und eine nachlaufende Kante auf, wobei die vorauslaufende Kante den Beginn der Signalstrecke und die nachlaufende Kante das Ende der Signalstrecke des Signalgebers definiert. Insbesondere in Bezug auf eine rotationssymmetrische Anordnung der Signalgeber ergibt sich so optional ein zwischen vorauslaufender Kante und nachlaufender Kante definierte Signalstrecke in Form eines Kreisbogenabschnitts. Optional ist wenigstens eine Signalstrecke als Fläche ausgebildet, die weiter optional zwischen der vorauslaufenden Kante und der nachlaufenden Kante verläuft. Auch ist es denkbar, insbesondere auf einem Signalgeber mehrere Signalstrecken parallel oder anderweitig relativ zueinander anzuordnen, um beispielsweise mit einem Signalgeber mehrere unterschiedliche Signalstrecken zur Verfügung zu stellen.

Optional sind über einen Rotationswinkel der Raddrehung und insbesondere einen 360° Rotationswinkel des Rades gesehen, der Drehwinkel zwischen den einzelnen aufeinander folgenden vorauslaufenden Kanten der einzelnen Signalgeber gleich und/oder, mit Ausnahme des Drehwinkels zwischen einer nachlaufenden Kante des Eichelementes und der nachlaufenden Kante des darauffolgenden Signalgeber, alle Drehwinkel zwischen den einzelnen nachlaufenden Kanten der einzelnen Signalgeber gleich und/oder optional sind über einen Rotationswinkel der Raddrehung und insbesondere einen 360° Rotationswinkel des Rades gesehen, der Drehwinkel zwischen den einzelnen aufeinander folgenden nachlaufenden Kanten der einzelnen Signalgeber gleich und/oder, mit Ausnahme des Drehwinkels zwischen einer vorauslaufenden Kante eines Signalgebers und der vorauslaufenden Kante des darauffolgenden Eichelements, alle Drehwinkel zwischen den einzelnen vorauslaufenden Kanten der einzelnen Signalgeber gleich.

Die Definition vorauslaufend und nachlaufend beziehen sich insbesondere auf eine Rotationsrichtung der Signalgeber relativ zum Sensorelement.

Optional liefert eine vorauslaufende Kante oder ein dergleichen Startelement am Signalgeber ein vom Sensorelement auslesbares Ramp-up-Signal oder ein Ramp-down-Signal. Optional liefert eine folgende nachlaufende Kante oder ein dergleichen Endelement am Signalgeber ein vom Sensorelement auslesbares Ramp-down-Signal bzw. ein Ramp-up-Signal. Es ist denkbar die Signalstrecke als Strecke zwischen einem Ramp-up-Signal und einem folgenden Ramp-Down-Signal oder als Strecke zwischen einem Ramp-down-Signal und einem folgenden Ramp-up Signal zu definieren. Der Signalgeber ist optional als das Element definiert, das die Signalstrecke beinhaltet. Optional liefert die vorauslaufende Kante ein Ramp-up-Signal oder ein Ramp-down-Signal und die folgende nachlaufende Kante entsprechend eine Ramp-down-Signal bzw. ein Ramp-up-Signal. Zwischen diesen Signalen ist optional die Signalstrecke des jeweiligen Signalgebers definiert.

Optional ist der Abstand der einzelnen Ramp-up-Signale aller Signalgeber gleich. Optional ist der Abstand der Ramp-down-Signale zwischen einem Signalgeber und dem darauffolgenden Eichelement größer oder kleiner als der Abstand der restlichen anderen Ramp-down-Signalabstände.

Von dieser Definition ist optional mit umfasst, dass der Abstand der einzelnen Ramp-down-Signale aller Signalgeber gleich ist und/oder dass der Abstand der Ramp-up-Signale zwischen einem Signalgeber und dem darauffolgenden Eichelement größer oder kleiner als der Abstand der restlichen anderen Ramp-up-Signalabstände.

Jeder Signalgeber ist im Bereich der Signalstrecke zwischen der vorauslaufenden Kante und der nachlaufenden Kante opak ausgebildet. Auf diese Weise können beispielsweise Signalgeber auch im Vordergrund von mitrotierenden Teilen, beispielsweise Bremsscheiben oder Speichen, verwendet werden, wobei mit dem Signalgeber kooperierende Sensoren durch diese im Hintergrund liegenden Teile nicht gestört werden.

Optional weist der Signalgeber wenigstens eine aus der Ebene der Signalgeberbasis und insbesondere aus der Ebene des Messrings hervorstehende Erhebung auf. Diese Erhebung kann von einem entsprechend ausgebildeten Sensorelement detektiert werden. Optional weisen die Erhebungen in einer zum Sensormittel weisenden oder von dieser wegweisenden Richtung. Bei wegweisender Bauweise kann auch von einer Vertiefung gesprochen werden. Es ist auch denkbar den Teilbereich zwischen zwei Erhebungen als Vertiefung zu definieren. Je nach Sensor ist es denkbar den Signalgeber im Bereich der Vertiefung oder im Bereich der Erhebung zu definieren. Optional stehen die Signalgeber, optional mit Ausnahme des Eichelementes, alle in der gleichen Richtung, und zwar zum Sensormittel vor oder weisen von diesem weg.

Optional ist die Signalstrecke des Eichelements in Umfangsrichtung betrachtet länger als die Signalstrecke der restlichen Signalelemente und insbesondere um wenigstens 5 %, weiter optional um wenigstens 10 % länger. Es ist denkbar, den Signalgeber als Farbcodierung auszuführen, der beispielsweise optisch detektierbar ist. Optional ist die Signalstrecke des Eichelementes anderes farbig gestaltet als die Signalstrecken der anderen Signalelemente. Optional ist die Signalstrecke des Eichelementes anders geometrisch definiert, insbesondere in seine Abmessungen, seiner Dicke etc. als die Signalstrecke der anderen Signalelemente. Es ist denkbar, den Signalgeber als Aussparung auszuführen. Optional weißt die Signalstrecke des Eichelementes ein anderes detektierbares Material auf wie die Signalstrecken der anderen Signalelemente, beispielsweise ein magnetisches Material oder ein magnetisiertes Material. Es ist denkbar, den Signalgeber magnetisch zu codieren. Auch ist es denkbar, den Signalgeber mit jeder anderen Art von Code zu versehen, wie dies aus dem Stand der Technik bekannt ist. All das gilt auch für das Eichelement.

Optional ist die Erhebung als eine Plateauerhebung ausgebildet, insbesondere mit wenigstens einer zur Ebene des Messrings komplanaren Plateauoberfläche. Diese Plateauoberfläche ist optional durch das Sensorelement detektierbar. Auch hier ist es möglich, die Plateauerhebung in Richtung des Sensormittels hervorstehend auszubilden oder von diesem wegweisend. Diese Richtungsdefinition ist vorzugsweise in Richtung der Rotationsachse des Rades zu verstehen.

Optional ist die Erhebung in die Signalgeberbasis und insbesondere den Messring eingeprägt. Über ein Verformungsverfahren und insbesondere das hierin beschrieben Verfahren kann auf diese Weise recht kostengünstig und schnell ein jeweiliger Signalgeber in Form einer Erhebung hergestellt werden.

Optional weist die Erhebung wenigstens eine vorauslaufende Kante und/oder wenigstens eine nachlaufende Kante auf, die aus der Signalgeberbasis und insbesondere dem Messring herausgeknickt, ausgestanzt oder dergleichen eingeschnitten und/oder die wenigstens abschnittsweise nicht mit der Signalgeberbasis verbunden ist. Die vorauslaufende Kante und/oder die nachlaufende Kante ist optional eine Kante, wie sie zuvor unter diesem Namen beschrieben wurde. Das Herausknicken, Ausstanzen oder dergleichen Einschneiden garantiert eine klare Detektierbarkeit der Kante durch das Sensorelement.

Optional ist die Erhebung über wenigstens eine im Wesentlichen in Längsrichtung der Signalgeberbasis verlaufende Längsseite mit der Signalgeberbasis verbunden. Insbesondere wenn die Signalgeberbasis als Messring oder Teilabschnitt eines Messringes ausgebildet ist, ist die Längsseite vorzugsweise bogenförmig und insbesondere komplementär zum Umfang des Messrings ausgebildet. Optional ist also die Längsseite bogenförmig ausgeformt. Ist die vorauslaufende Kante und/oder die nachlaufende Kante als Knick ausgestanzt oder dergleichen eingeschnitten ausgeführt, ergibt sich so eine Erhebung, die optional in tangentialer Richtung bzw. längsseitig mit der Signalgeberbasis verbunden und im Bereich der vorauslaufenden und nachlaufenden Kanten nicht mit der Signalgeberbasis verbunden ist. Optional hat die Erhebung also in Umfangrichtung betrachtet die Form einer Kuppe mit seitlichen Verbindungspunkten zur Signalgeberbasis und einem offenen Vorder- und/oder Hinterteil, nämlich im Bereich der vorauslaufenden Kante und/oder der nachlaufenden Kante. Optional ist die vorauslaufende Kante und/oder die nachlaufende Kante an eine Stirnseitenwand angrenzend ausgeführt, die in einer von der Signalgeberebene und/oder der Signalgeberbasis abweichenden und insbesondere orthogonal dazu verlaufenden Ebene verläuft. Das bedeutet, dass optional die vorauslaufende Kante und/oder die nachlaufende Kante Teil einer optional vertikalen Stirnseiten- bzw. Rückseitenwand sind. Es bildet sich so vorzugsweise eine vorauslaufende Kante und/oder nachlaufende Kante mit einem 90° Winkel zwischen Stirn- bzw. Rückseitenwand und Deckel der Erhebung und insbesondere einer zuvor genannten Plateauebene. Auch ist es denkbar, die Stirnseitenwand in Richtung der Signalgeberbasis nach innen zu kippen, sodass sich zwischen dieser Stirnseitenwand und dem Deckel der Erhebung und/oder der Signalgeberbasis ein Winkel < 90° und insofern ein spitzer Winkel ergibt. Der Winkel ist vorzugsweise so gewählt, dass die vorauslaufende Stirnseitenwand in Rotationsrichtung betrachtet ausgehend von der Signalgeberbasis nach vorne und/oder die nachlaufende Stirnseitenwand ausgehend von der Signalgeberbasis nach hinten geneigt ist.

Optional ist die vorauslaufende Kante und/oder die nachlaufende Kante in Signalgeberebene betrachtet als Geraden ausgebildet. Optional sind also die vorauslaufende Kante und/oder die nachlaufende Kante in einer Ansichtsrichtung auf die Signalgeberebene bzw. die Signalgeberbasis bzw. einen entsprechend ausgebildeten Messring als Geraden ausgebildet.

Optional sind die vorauslaufende Kante und/oder die nachlaufende Kante in Signalgeberebene bezogen auf eine Radialrichtung des Rades um einen Verzugswinkel δ > 5°, optional δ > 10° verschwenkt verlaufend angeordnet. Die vorauslaufende Kante und/oder die nachlaufende Kante sind also optional nicht radial zum Rotationsmittel des Rades ausgebildet, sondern dazu verschwenkt. Dies verbessert das Detektionsergebnis des Sensorelements.

Es hat sich als vorteilhaft herausgestellt, diesen Verzugswinkel δ derart auszubilden, dass die vorauslaufende Kante und/oder die nachlaufende Kante in Bezug auf die Rotationsrichtung und die Radialrichtung nach hinten geneigt sind.

Wie erwähnt betrifft die Erfindung neben dem inkrementellen Messwegesystem auch ein Signalgebermittel für ein inkrementelles Messwegesystem, wie es hier beschrieben ist, und ein Fahrrad mit einem solchen inkrementellen Messwegesystem. Aus Redundanzgründen wird nicht einzeln auf diese Ausbildungen eingegangen, sondern auf sämtliche in Bezug auf das inkrementelle Messwegesystem genannten Ausführungsformen und Vorteile verwiesen. Diese sind auf das Signalgebermittel bzw. das Fahrrad identisch anwendbar und übertragbar.

Selbiges gilt auch für das hier beschriebene Verfahren zur Herstellung eines Signalgebermittels für ein inkrementelles Messwegesystem, wie es hier genannt ist.

Optional umfasst das inkrementelle Messwegesystem ein Übertragungsmittel, über das die detektierten Messsignale einer Auswertung und insbesondere einer Geschwindigkeitsauswertung zugeführt werden. Das inkrementelle Messwegesystem umfasst dazu optional Signalleitungsmittel, die die detektierten Messsignale vom Sensorelement an das Auswertungsmittel weiterleiten. Diese Weiterleitung kann kabelgebunden, aber auch drahtlos erfolgen. Weiter ist optional ein Controller vorgesehen, der die Auswertung der detektierten Signale ermöglicht. Weiter ist optional eine Anzeigeeinrichtung, beispielsweise ein Tacho oder eine entsprechendes Display, oder ein Kopplungsmittel zum Koppel mit einem solchen, beispielsweise einem Mobiltelefon vorgesehen

Weitere Ausführungsformen der Erfindung ergeben sich aus den Unteransprüchen.

Im Folgenden wird die Erfindung anhand von Ausführungsbeispielen beschrieben, die durch die beiliegenden Zeichnungen näher erläutert werden. Hierbei zeigen:
- Fig. 1: eine isometrische Ansicht einer ersten Ausführungsform des erfindungsgemäßen Fahrrades;

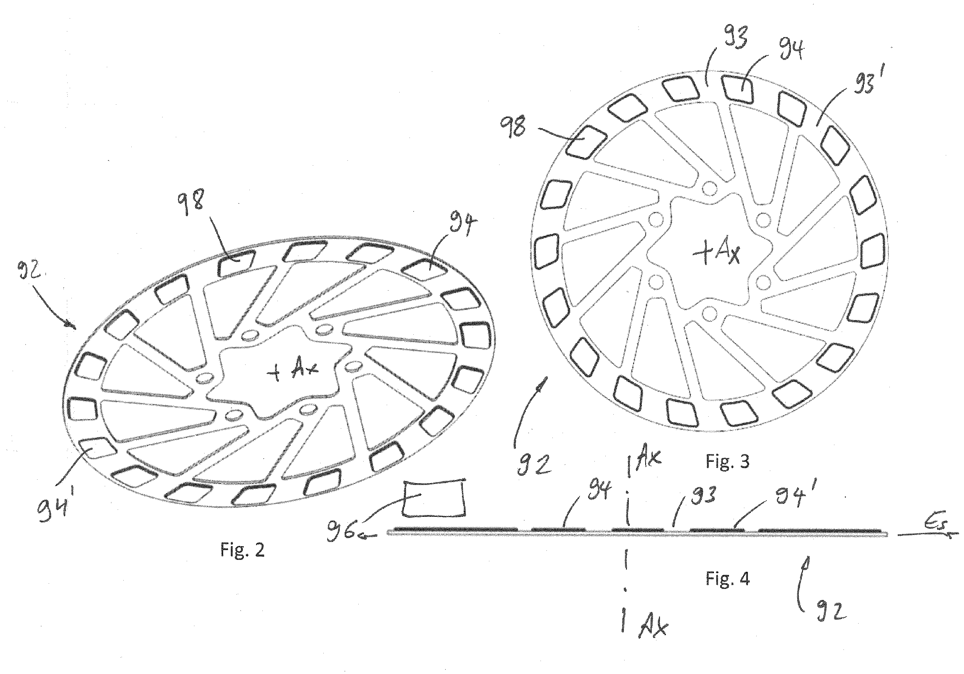

- Fig. 2: eine isometrische Darstellung einer ersten Ausführungsform eines inkrementellen Messwegesystems umfassend ein Signalgebermittel und insbesondere einen Messring gemäß Fig. 1;
- Fig. 3: eine Ansicht des Messrings gemäß Fig. 2;
- Fig. 4: eine Seitenansicht des Messrings gemäß Fig. 2;
- Fig. 5: eine Ansicht einer weiteren Ausführungsform eines inkrementellen Messwegesystems;
- Fig. 6: eine isometrische Darstellung eines Signalgebermittels des Messwegesystems gemäß Fig. 5 von schräg oben;
- Fig. 7: eine isometrische Darstellung des Signalgebermittels gemäß Fig. 6 von schräg unten;
- Fig. 8 und Fig. 9: isometrische Detaildarstellungen bzw. Schnitte des Signalgebermittels gemäß Fig. 6;
- Fig. 10: eine Ansicht einer weiteren Ausführungsform eines inkrementellen Messwegesystems;
- Fig. 11: eine isometrische Darstellung eines Signalgebermittels des Messwegesystems gemäß Fig. 10 von schräg oben;
- Fig. 12: eine isometrische Darstellung des Signalgebermittels gemäß Fig. 11 von schräg unten;
- Fig. 13 und Fig. 14: isometrische Detaildarstellungen bzw. Schnitte des Signalgebermittels gemäß Fig. 11;
- Fig. 15: eine Ansicht einer weiteren Ausführungsform des inkrementellen Messwegesystems; und
- Fig. 16 und 17: isometrische Detaildarstellungen des Signalgebermittels gemäß Fig. 15.

Im Folgenden werden für gleiche und gleich wirkende Bauteile dieselben Bezugsziffern verwendet, wobei bisweilen Hochindizes ihre Anwendung finden.

Wenn nicht anders definiert, haben alle hier verwendeten Termini (einschließlich technischer und wissenschaftlicher Termini) die gleiche Bedeutung, und insbesondere eine Bedeutung, wie sie allgemein von einem Durchschnittsfachmann auf diesem Gebiet verstanden wird, wenn sie im Zusammenhang mit der Beschreibung und den Zeichnungen interpretiert werden. Es versteht sich ferner, dass Termini, wie diejenigen die in allgemein verwendeten Wörterbüchern definiert sind, in Bezug auf das hier besprochene technische Gebiet interpretiert werden, und nicht in einem idealisierten oder in einem übertrieben formalen Sinn, außer dies ist explizit so definiert. In bestimmten Fällen kann auf eine detaillierte Beschreibung allseits bekannter Vorrichtungen und Verfahren verzichtet werden, um Redundanz der Beschreibung zu vermeiden. Die Beschreibung bestimmter Ausführungsformen und die darin verwendete Terminologie soll die Erfindung nicht einschränken. Die Singularformen "ein", "der/die/das" mögen auch die Pluralformen mit einschließen, wenn es der Kontext nicht eindeutig anders nahelegt. Der Ausdruck "und/oder" schließt jegliche und alle Kombinationen eines oder mehrerer der zugehörigen aufgelisteten Gegenstände mit ein. Es versteht sich, dass die Begriffe "umfasst" und/oder "umfassend" das Vorhandensein genannter Merkmale angibt, jedoch das Vorhandensein oder das Hinzufügen eines oder mehrerer anderer Merkmale nicht ausschließt. Ferner versteht es sich, dass wenn ein bestimmter Schritt eines Verfahrens als einem anderen Schritt folgend angegeben wird, er direkt auf diesen anderen Schritt folgen kann oder einer oder mehrere Zwischenschritte durchgeführt werden können, bevor der bestimmte Schritt ausgeführt wird, wenn das nicht anders angegeben ist. In der gleichen Weise versteht es sich, dass wenn eine Verbindung zwischen Strukturen oder Komponenten beschrieben ist, diese Verbindung direkt oder über Zwischenstrukturen oder -komponenten erfolgen kann, außer es ist anderweitig spezifiziert. Im Fall eines Konflikts gilt die vorliegende Spezifikation, einschließlich ihrer Definitionen.

Die Erfindung wird hier anhand der beiliegenden Zeichnungen beschrieben, in denen Ausführungsformen der Erfindung gezeigt sind. Ausführungsformen sind hier angegeben, damit die vorliegende Offenbarung gründlich und vollständig ist und den Umfang der Erfindung dem Fachmann in vollständiger aber beispielhafter Weise darlegt. Die Beschreibung der beispielhaften Ausführungsformen soll im Zusammenhang mit den beiliegenden Zeichnungen gelesen werden, die als Teil der ganzen schriftlichen Beschreibung gelten sollen. In den Zeichnungen kann es vorkommen, dass die absoluten und relativen Größen von Systemen, Komponenten, Schichten und Bereichen aus Gründen der Deutlichkeit übertrieben dargestellt sind. Ausführungsformen können anhand schematischer und/oder querschnittsartiger Illustrationen, idealisierter Ausführungsformen und Zwischenstrukturen der Erfindung beschrieben sein. Relative Termini sowie auch ihre Ableitungen sollten so verstanden werden, dass sie sich auf die Ausrichtung beziehen, wie sie dort in der gerade besprochenen Zeichnung beschrieben oder gezeigt ist. Diese relativen Termini dienen der übersichtlicheren Beschreibung und erfordern nicht, dass das System in einer bestimmten Ausrichtung aufgebaut oder betrieben werden muss, außer es ist explizit anders angegeben.

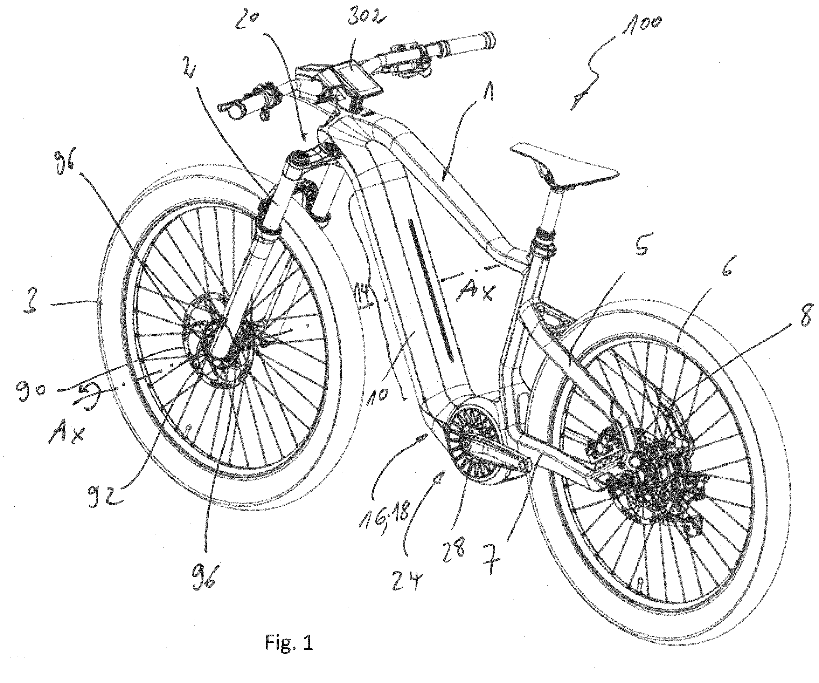

Fig. 1 zeigt eine isometrische Darstellung einer Ausführungsform des erfindungsgemäßen Fahrrades 100, umfassend einen Fahrradrahmen 1 und eine Ausführungsform des erfindungsgemäßen inkrementelles Messwegesystem. Am Fahrradrahmen 1 ist in einem Lenkkopfbereich 20 eine Vordergabel 2 angeordnet, die ein Vorderrad 3 trägt. An diesem Vorderrad 3 ist eine Bremsscheibe 90 umfassend ein Signalgebermittel 210 und insbesondere einen Messring 92 angeordnet, der im weiteren Verlauf noch im Detail beschrieben wird, und Teil eines inkrementellen Messwegesystems ist. Weiter ist am Fahrradrahmen 1 ein Hinterrad 6 angeordnet, das an einem Ausfallende 8 positioniert ist. Das Ausfallende 8 ist Teil des Fahrradrahmens 1, wobei es in bekannter Art und Weise an Sitzstreben 5 und Kettenstreben 7 angeschlossen ist. Optional ist es möglich, obigen Messring 92 bzw. das inkrementelle Messwegesystem auch oder alternativ am Hinterrad bzw. Rahmenkomponenten in diesem Bereich zu positionieren.

Der Fahrradrahmen 1 umfasst einen Antriebslagerbereich 24, an dem ein Antriebslagergehäuse zur Aufnahme eines insbesondere batteriebetriebenen Hilfsmotors 28 ausgebildet ist. Der Hilfsmotor 28 kann beispielsweise ein Elektromotor und insbesondere ein Elektromotor mit Kurbelantrieb sein.

Hinsichtlich der hier dargestellten Ausführungsformen gilt das im vorhergehenden allgemeinen Teil beschriebene identisch; es ist in Gänze auf die dargestellten Ausführungsformen anwendbar.

Der Fahrradrahmen 1 umfasst darüber hinaus ein Rahmenrohr 10, das zwischen dem Lenkkopfbereich 20 und dem Antriebslagerbereich 24 verläuft. In dieser Ausführungsform kann das Rahmenrohr 10 als Unterrohr bezeichnet werden. Es verläuft optional in geneigter Ausführung von einem in Bezug auf die Fahrradlängsebene vorne oben angeordnetem Lenkkopfbereich 20 und einem im Wesentlichen mittig unten angeordneten Motorlagerbereich.

Das Rahmenrohr 10 ist derart ausgebildet, dass in seinem Innenraum und einem dort axial verlaufenden Batterieaufnahmeabschnitt 14 eine Batterie. insbesondere für den Hilfsantrieb 28, eingeschoben werden kann.

Dabei ist erfindungsgemäß der Batterieaufnahmeabschnitt 14 mit einer stirnseitig 16 verlaufenden Einschuböffnung 18 ausgestattet, über die die Batterie mit ihrer Stirnseite voraus in den Batterieaufnahmeabschnitt einschiebbar ist.

Wie in Fig. 1 dargestellt, umfasst der Fahrradrahmen 1 eine erste Ausführungsform des inkrementellen Messwegesystems, mit wenigstens einem, hier beispielsweise am Vorderrad 3 angeordneten Messring 92 als Teil des inkrementellen Wegemesssystems, beispielsweise für eine Tachometereinheit. Es ist denkbar dieses Messwegesystem und insbesondere den Messring auch oder alternativ im Bereich des Hinterrades anzuordnen.

Die in Fig. 1 dargestellte erste Ausführungsform des inkrementelle Wegemesssystem, umfasst also das Signalgebermittel 210 bzw. den Messring 92 und ein damit operierendes Sensormittel 96. Es sei darauf hingewiesen, dass ein solches Messsystem und insbesondere der Messring 92, hier exemplarisch auf einer Bremsscheibe 90 befestigt, nicht nur bei dem erfindungsgemäßen Fahrrad 100, sondern bei jeder Art von Fahrrad angewendet werden können. Wie erwähnt ist optional auf der hier dargestellten Bremsscheibe 90 der Messring 92 ausgebildet oder befestigt. Der Messring 92 ist optional rotationssymmetrisch zu einer Achse Ax ausgebildet, die im montierten Zustand am Fahrradvorderreifen 3 co-axial zur Montageachse (nicht dargestellt) angeordnet ist. Der Messring 92 weist bei dieser ersten Ausführungsform eine Mehrzahl an Signalgebern, hier in Form von Messerhebungen 94 auf, die in Form von Ausprägungen aus dem Messring 92 hervorstehen und optional im montierten Zustand (siehe Fig. 1) in Richtung eines Sensormittels 96 weisen bzw. in geringeren Abstand an diesem vorbeirotieren als deren Umrandungen 93. Es ist optional auch möglich, die Erhebungen in eine vom Sensormittel 96 wegweisenden Richtung auszubilden, so dass in Rotation die Umrandungen 93, Umlaufend die Erhebungen 94 näher am Sensormittel 96 liegen als die Erhebungen.

Das Sensormittel ist dazu ausgebildet, die Erhebungen 94 bzw. bei der anderen zuvor erwähnten Ausführungsform die Umrandungen 93 während ihrer Rotation am Messsensor 96 vorbei zu detektieren. Aus dem Stand der Technik ist es bekannt, ein solches inkrementelles Messwegesystem mittels eines Messrings zur Verfügung zu stellen, bei der der Messring Aussparungen aufweist und der Messsensor diese Aussparungen bzw. die Stege zwischen den Aussparungen detektiert. Ein solches Messsystem ist jedoch fehleranfällig; es galt, es zu verbessern.

Das nunmehr vorgestellt inkrementelle Messwegesystem umfassend den Messring 92 und die darauf ausgebildeten Erhebungen 94 stellt ein sehr viel besseres und zuverlässigeres System zur Verfügung.

Insbesondere ist es denkbar, dass wenigstens eine Erhebung 94 größer oder kleiner ausgebildet ist als die restlichen Erhebungen. Es stellt somit ein Eichelement 98 zur Verfügung, das insbesondere eine Manipulation der Messergebnisse verhindern kann. So kann beispielsweise durch eine entsprechend zugeordnete Auslöseeinheit, beispielsweise am Tacho des Fahrrades (siehe beispielsweise Fig. 1), ein Messverfahren initiiert werden, bei dem die Umdrehungen der Messrings 92 anhand des Durchlaufs des Eichelements 98 gezählt werden. Eine Manipulation des Geschwindigkeitsmesssystems kann so erschwert werden. Insbesondere im Zusammenhang mit einem batteriebetriebenen Fahrrad gemäß der vorliegenden Anmeldung haben ein solches inkrementelles Wegemesssystem und insbesondere die Messring 92 einen besonderen Vorteil. Die größere Ausbildung wenigstens einer Erhebung 94 bzw. des Eichelementes 98 bezieht sich hier optional auf die Länge in Umfangsrichtung, also die Länge, die am Sensormittel während der Rotation vorbeiläuft. Optional ist also das Eichelement 98 in Umfangsrichtung betrachtet länger als die restlichen Erhebungen 94 und insbesondere um wenigstens 5%, weiter optional um wenigstens 10% länger.

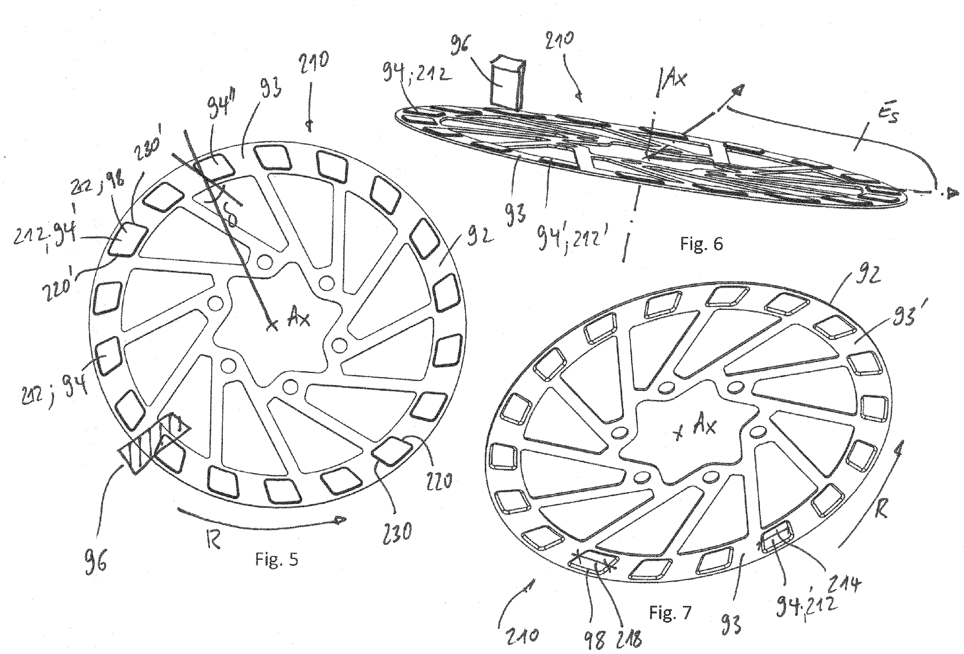

Die Fig. 5 bis 9 zeigen eine zweite Ausführungsform des erfindungsgemäßen inkrementellen Messwegesystems bzw. des Signalgebermittels 210 für ein solches. Wie bereits erwähnt, und auch in Fig. 1 dargestellt, kann das Messwegesystem an einem Fahrrad 100 befestigt werden, um eine Rotationsgeschwindigkeit des Rades 3 des Fahrrades 100 relativ zu einem Fixpunkt am Fahrrad 100, beispielsweise der Gabel 2 und/oder einem Rahmen 1 oder einem anderen Teil des Fahrrades, zu ermitteln. Das inkrementelle Messwegesystem umfasst bei dieser Ausführungsform ebenfalls wenigstens ein Signalgebermittel 210 mit einer Mehrzahl an, in einer Signalgeberebene Es (siehe Fig. 6) angeordneten Signalgebern 212 und wenigstens ein mit diesen Signalgebern 212 kooperierendes Sensormittel 96. Das Signalgebermittel 210 kann am Rad 3 und das Sensormittel am Fixpunkt 2 oder umgekehrt derart angeordnet werden, dass bei einer Rotation des Rades 3 die Signalgeber 212 zur Abtastung wenigstens einer Signalstrecke 214, 218, insbesondere auf den Signalgebern, und Bildung wenigstens eines abgreifbaren Messsignals am Sensorelement 96 (relativ betrachtet) vorbeirotieren. Die Signalstrecken sind exemplarisch in den Fig. 7 bis 9 dargestellt. Sobald ein Signalgeber 212 am Sensormittel 96 vorbeirotiert (oder das Sensormittel am Signalgeber vorbeirotiert), wird ein Messsignal erzeugt, das optional kabelgebunden oder kabellos an einen Controller 302 (siehe Fig. 1) gesendet und dort ausgewertet werden kann. Auf diese Weise ist beispielsweise eine Rotationsgeschwindigkeit des Rades ermittelbar. Beispielsweise zur Ermittlung oder Ansteuerung eines ABS-Signals kann über ein solches Messwegesystem auch die Bewegung des Rades an sich detektiert werden. Hier sind sämtliche aus dem Stand der Technik bekannten Detektionsverfahren anwendbar.

Erfindungsgemäß ist wenigstens ein Signalgeber 212 und optional genau ein Signalgeber als Eichelement 98 ausgebildet, umfassend wenigstens eine Signalstrecke 218, die von den Signalstrecken 214 der anderen Signalgeber 212 abweichend ausgebildet ist. Bei der hier dargestellten Ausführungsform ist die Signalstrecke 218 des Eichelements 98 länger ausgebildet als die anderen Signalstrecken 214.

Das Sensorelement 96 ist in den Fig. 5 und 6 exemplarisch dargestellt; die Fig. 7 bis 9 zeigen exemplarisch eine Ausführungsform des verwendeten Signalgebermittels 210. Dieses Signalgebermittel 210 ist bei dieser Ausführungsform als Messring 92 ausgebildet. Es ist möglich, diesen Messring 92 als gänzlich umlaufenden Ring auszubilden, er kann aber auch lediglich als Teilring ausgebildet sein. Grundsätzlich ist es denkbar, wenigstens einen Teil der Signalgeber 212 auf einer Signalgeberbasis 92 und wie hier insbesondere auf einem Messring anzuordnen, wobei der Messring insbesondere optional eine Achse Ax umfasst, die vorzugsweise koaxial zur Rotationsachse des Rades 3 (siehe Fig. 1) verläuft. Es ist denkbar, die Signalgeber auf mehreren Signalgeberbasen 92 und insbesondere mehreren Messringteilabschnitten anzuordnen. Bei dieser Ausführungsform wurde eine einzige Signalgeberbasis 92 bzw. ein einziger Messring 92 verwendet.

Es ist denkbar, die Signalgeberbasis in eine Bremsscheibe 90 (siehe Fig. 1) zu integrieren. Die Signalgeberbasis 92 kann auch auf einer Bremsscheibe befestigt werden. Wie eingangs bereits erwähnt, ist es auch möglich, die Signalgeberbasis am Fixpunkt des Fahrrades zu befestigen, sodass sie also nicht rotiert, während das Sensorelement dann rotierend, insbesondere am Rad 3 befestigt, ausgebildet wird.

Optional ist wenigstens ein Signalgeber 212 und vorzugsweise alle Signalgeber 212 und das Sensorelement 96 als Näherungsschalter ausgebildet. Das bedeutet, dass Signalgeber und Sensorelement einen Näherungsschalter und insbesondere einen Näherungsschalter wie er zuvor bereits beschrieben wurde.

In Bezug auf die Signalstrecken 214 und 218 ist es denkbar, die Signalstrecke 218 des Eichelements 98 unter den anderen Signalstrecken 214 eindeutig identifizierbar auszubilden. Auch ist es möglich, die Signalstrecken 214 der anderen Signalgeber 212 identisch auszubilden. Bei dieser Ausführungsform kann beispielsweise jede Signalstrecke 214 gleichlang wie die anderen Signalstrecken 214 ausgebildet werden, während die Signalstrecke 218 kürzer oder länger ausgebildet ist. Zudem sind die anderen zuvor beschrieben Codiermöglichkeiten anwendbar.

Optional weist das Signalgebermittel 210 eine bevorzugte Rotationsrichtung R auf, die hier optional entgegen dem Uhrzeigersinn ausgewählt ist. Diese Rotationsrichtung bezieht sich auf eine Montageseite des Signalgebermittels linksseitig eines Fahrrades, wobei sie sich linksseitig auf die Fahrtrichtung des Fahrrades bezieht. Bei einer rechtsseitigen Anordnung ist die Rotationsrichtung vorzugsweise entgegengesetzt gewählt.

Jedes Signalgebermittel 212 weist eine vorauslaufende Kante 220 und eine nachlaufende Kante 230 auf, wobei die vorauslaufende Kante 220 den Beginn der Signalstrecke 214, 218 und die nachlaufende Kante 230 das Ende der Signalstrecke 214, 218 des Signalgebers definiert. Dies ist beispielsweise in den Fig. 5, 8 und 9 dargestellt. Sobald ein Signalgeber 212 mit seiner vorauslaufenden Kante das Sensormittel 96 passiert, wird optional ein sog. Ramp-up-Signal generiert, das den Beginn der Signalstrecke definiert. Nach Durchlauf der nachlaufenden Kante 230 wird optional ein Ramp-down-Signal generiert, das das Ende der Signalstrecke 214, 218 signalisiert. Optional wird der Signalgeber als Zwischenraum zwischen der vorauslaufenden Kante und der Nachlaufenden Kante einer detektierten Signalstrecke verstanden.

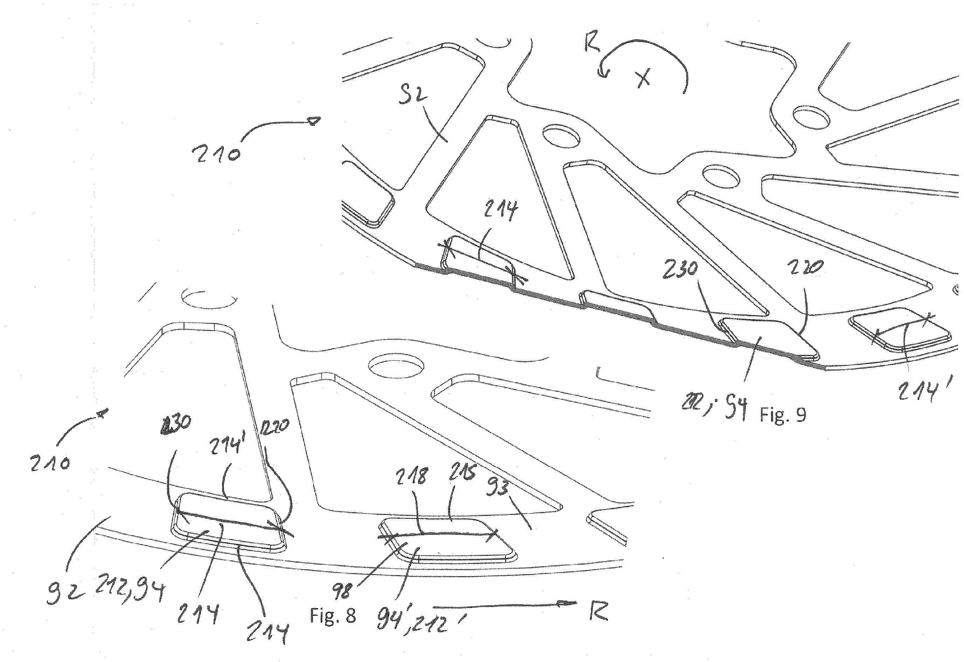

Wie insbesondere in den Fig. 8 und 9 dargestellt, weist bei dieser Ausführungsform jeder Signalgeber 212 wenigstens eine aus der Ebene Es der Signalgeberbasis 92 hervorstehende Erhebung 94 auf. Diese Erhebung weist optional eine Plateauerhebung auf, insbesondere wenigstens einer zur Ebene der Signalgeberbasis 92 coplanare Plateaufläche 215. Bei dieser Ausführungsform weisen die Erhebungen 94 in einer zum Sensormittel 96 weisenden Richtung. Weiter optional sind die Erhebungen hier opak ausgebildet.

In dieser Ausführungsform sind die Signalgeber bzw. Erhebungen 94 in die Signalgeberbasis 92 bzw. den Messring 92 eingeprägt oder dergleichen plastisch materialverformend, insbesondere mittels eines Prägeverfahrens eingebracht. Durch eine plastische Verformung treten so die Erhebungen 94 aus der Umrandung 93 der Signalgeberbasis 92 hervor. Die resultierenden Formen der vorauslaufenden Kanten 220 und nachlaufenden Kanten 230 sind exemplarisch im Schnitt gemäß Fig. 9 dargestellt. Aufgrund des verwendeten Verformungsverfahrens sind hier die Kanten 220, 230 rundlich ausgebildet.

Es ist erkennbar, dass die jeweiligen Signalgeber 212 neben den vorauslaufenden Kanten 220 und den nachlaufenden Kanten 230 durch Längsseiten 240 definiert sind. Diese Längsseiten 240 sind bei dieser Ausführungsform optional bogenförmig ausgeformt, wobei der Bogen optional als Kreisbogen radial zum Achsmittelpunkt der Rotationsachse Ax verläuft. Auch erkennbar ist, dass die Signalgeber 212 sowohl mit ihren vorauslaufenden Kanten 220 und den nachlaufenden Kanten 230 als auch mit den Längsseiten 240 mit der Signalgeberbasis 92 bzw. den Umrandungen 93 verbunden sind.

Optional sind die vorauslaufende Kante 220 und/oder die nachlaufende Kante 230 in Signalgeberebene Es betrachtet als Geraden ausgebildet. Wie in Fig. 5 dargestellt, sind diese Geraden in Signalgeberebene Es betrachtet optional in Radialrichtung des Rades, um einen Verzugswinkel von δ > 5°, optional δ > 10° verschwenkt verlaufend angeordnet. Bei dieser Ausführungsform sind die vorauslaufende Kante und/oder die nachlaufende Kante um diesen Verzugswinkel δ in Rotationsrichtung nach vorne geneigt ausgebildet.

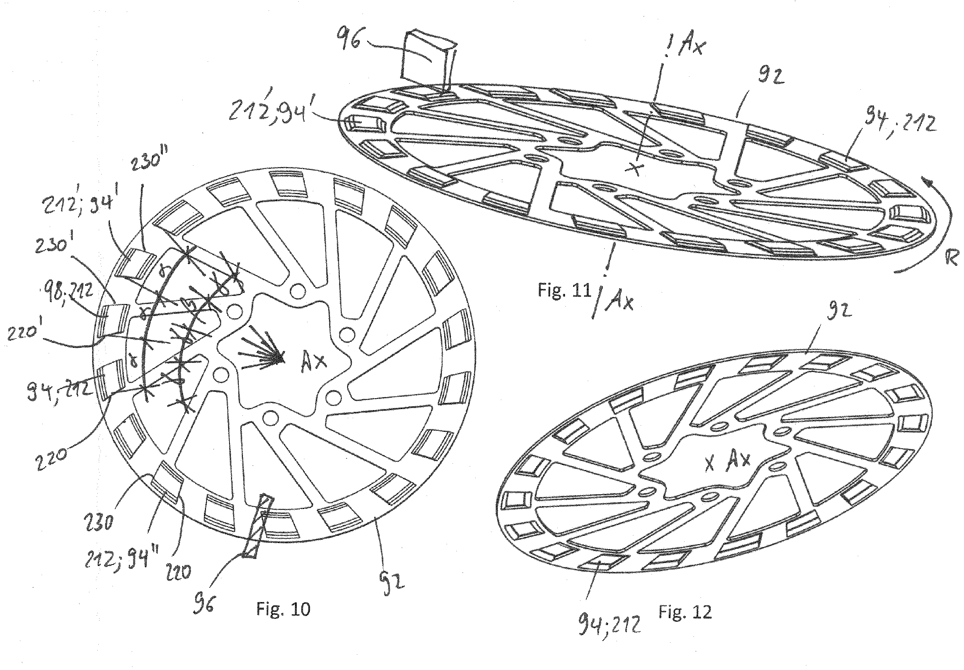

Die Fig. 10 bis 14 zeigen eine weitere Ausführungsform des erfindungsgemäßen inkrementellen Messwegesystems und insbesondere eine weitere Ausführungsform des erfindungsgemäßen Signalgebermittels 210. Das Signalgebermittel 210 entspricht im Wesentlichen dem zuvor beschriebenen Signalgebermittel, es weist jedoch von diesem unterschiedliche Signalgeber 212 auf. Zwar sind hier die Signalgeber 212 ebenfalls als Erhebungen 94 ausgeführt, sie weisen jedoch andersartig ausgebildete vorauslaufende und nachlaufende Kanten 220, 230 auf.

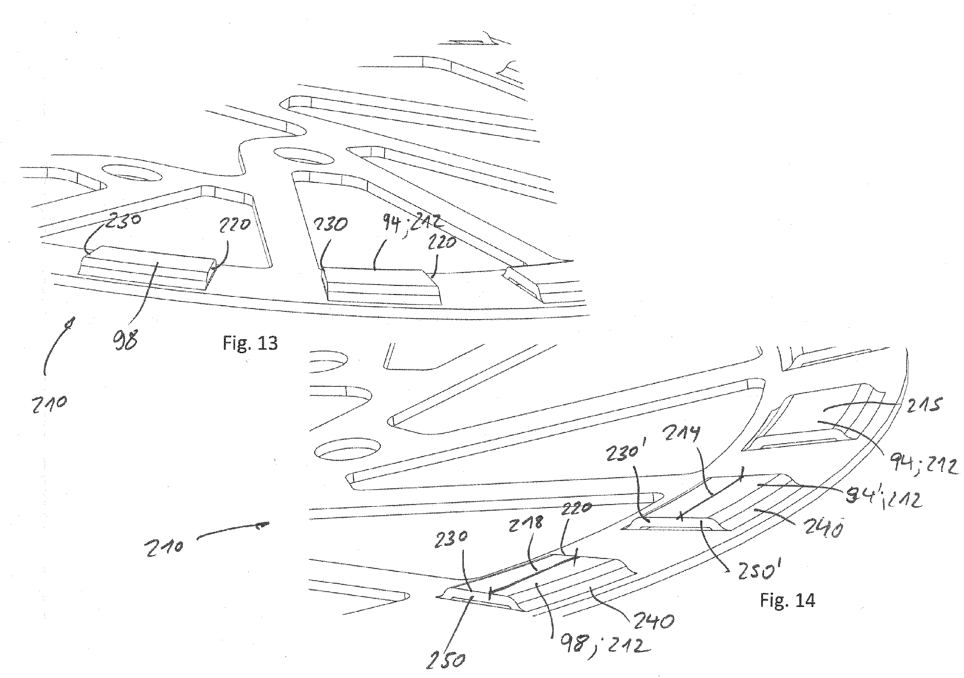

Optional sind nämlich die vorauslaufende Kante 220 und/oder wenigstens eine nachlaufende Kante 230 aus der Signalgeberbasis 92 herausgeknickt, ausgestanzt oder dergleichen eingeschnitten. Zudem ist es möglich, wie insbesondere in den Fig. 13 und 14 dargestellt, dass diese Kanten wenigstens abschnittsweise nicht mit der Signalgeberbasis 92 verbunden sind.

Erkennbar ist, dass auch bei dieser Ausführungsform optional die vorauslaufende Kante 220 und/oder die nachlaufende Kante 230 in Signalgeberebene Es betrachtet als Geraden ausgebildet sind. Weiterhin ist es denkbar, dass die vorauslaufende Kante 220 und/oder die nachlaufende Kante 230 an eine Stirnseitenwand 250 angrenzen, die in einer von der Signalgeberebene Es und/oder der Signalgeberbasis 92 abweichenden und insbesondere orthogonal dazu verlaufenden Ebene verläuft. Dies ist ebenfalls in den Fig. 13 und 14 erkennbar.

Weiter erkennbar ist, dass bei dieser Ausführungsform nur die Längsseiten 240 mit der Signalgeberbasis 92 verbunden sind, während die vorauslaufenden und nachlaufenden Kanten 220, 230 nicht mit der Signalgeberbasis bzw. abschnittsweise nicht mit der Signalgeberbasis verbunden sind. Auf diese Weise bildet sich ein Signalgeber 212 bzw. eine Erhebung 94 mit einer sehr klar umrissenen Signalstrecke 214, 218 aus.

Wie insbesondere in Fig. 10 dargestellt, sind optional über einen Rotationswinkel der Raddrehungen, insbesondere einen 360° Rotationswinkel gesehen, alle Drehwinkel α zwischen den einzelnen aufeinanderfolgenden vorauslaufenden Kanten 220, der einzelnen Signalgeber 212 gleich und/oder, mit Ausnahme des Drehwinkels β zwischen einer nachlaufenden Kante 230 des Eichelements 98 und der nachlaufenden Kante 230 des darauf folgenden Signalgebers 212, alle Drehwinkel γ zwischen den einzelnen nachlaufenden Kanten 230 der einzelnen Signalgeber 212, gleich und/oder sind optional über einen Rotationswinkel der Raddrehung und insbesondere einen 360° Rotationswinkel des Rades gesehen, der Drehwinkel zwischen den einzelnen aufeinander folgenden nachlaufenden Kanten 230 der einzelnen Signalgeber gleich und/oder, mit Ausnahme des Drehwinkels zwischen einer vorauslaufenden Kante 220 eines Signalgebers 212 und der vorauslaufenden Kante 220 des darauffolgenden Eichelements 98, alle Drehwinkel zwischen den einzelnen vorauslaufenden Kanten 220 der einzelnen Signalgeber 212 gleich sind.

Optional bildet sich bei der hier dargestellten Ausführungsform der Abstand der jeweiligen Ramp-up-Signale als gleich heraus, während ein Abstand zwischen einem Ramp-down-Signal und den anderen Ramp-down-Signalen unterschiedlich ist, oder umgekehrt. Dieser unterschiedliche Abstand ist dem Eichelement 98 und dessen unterschiedlicher Signalstrecke 218 geschuldet. Durch dieses eine unterschiedliche Eichelement wird eine Manipulation des Signalgebermittels 210 zuverlässig verhindert.

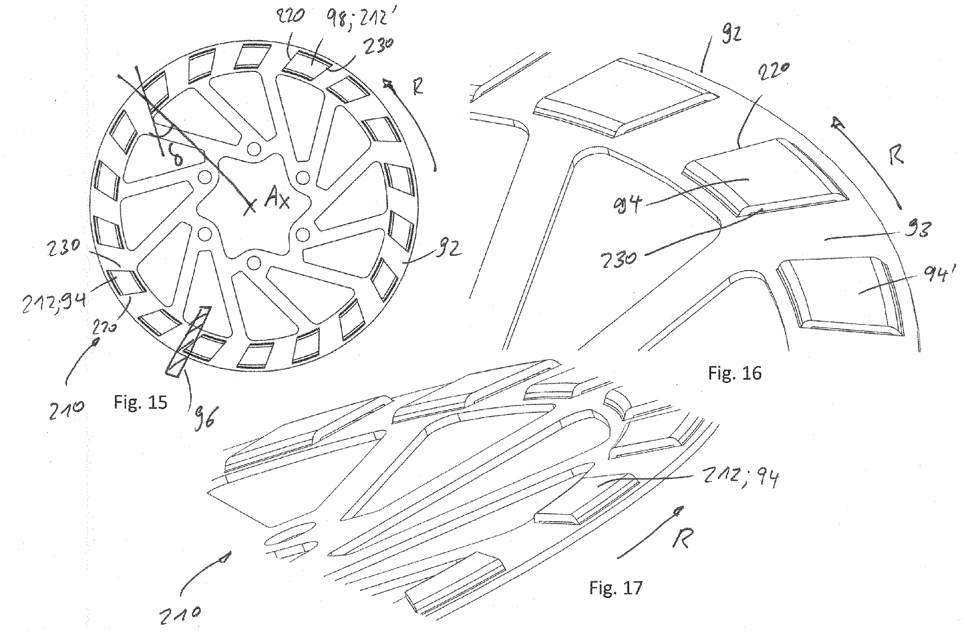

Die Fig. 15 bis 16 zeigen eine vierte Ausführungsform des erfindungsgemäßen inkrementellen Messwegesystems bzw. eine weitere Ausführungsform des erfindungsgemäßen Signalgebermittels 212. Diese Ausführungsform ist nahezu identisch zu der zuvor beschriebenen dritten Ausführungsform, jedoch sind hier die Signalgeber mit ihren vorauslaufenden Kanten 220 und nachlaufenden Kanten 230 in Bezug auf die Radialrichtung unterschiedlich verzogen ausgebildet. Bei dieser Ausführungsform ist die vorauslaufende Kante 220 und/oder die nachlaufende Kante 230 in Signalgeberebene Es betrachtet in Radialrichtung des Rades um einen Verzugswinkel δ > 5° und optional δ > 10° verschwenkt nach hinten geneigt angeordnet. Eine solche Ausführungsform hat sich als besonders vorteilhaft zur Ermittlung eines genauen Detektionssignals herausgestellt.

Wie bereits erwähnt umfasst die Erfindung auch ein Verfahren zur Herstellung eines Signalgebermittels für ein inkrementelles Messwegesystem, wie es hier beschrieben ist, umfassend die nachfolgenden Schritte: Bereitstellen einer Signalgeberbasis und insbesondere eines Messrings; Ausbilden und insbesondere Einprägen einer Mehrzahl an Signalgebern in die Signalgeberbasis, jeweils umfassend wenigstens eine von einem Sensorelement abtastbare Signalstrecke, wobei wenigstens ein Signalgeber, optional genau ein Signalgeber, als Eichelement ausgebildet wird, umfassend wenigstens eine Signalstrecke, die von den Signalstrecken der anderen Signalgeber abweichend ausgebildet ist. Darüber hinaus umfasst das Verfahren optional alle anderen Merkmale, wie sie zuvor in Bezug auf das Fahrrad, das inkrementelle Messwegesystem bzw. das Signalgebermittel beschrieben wurden. Aus Redundanzgründen wird hier nicht explizit einzeln darauf eingegangen, sondern es wird darauf verwiesen, dass diese Merkmale in Form von Verfahrensschritten und der Herstellung solcher Merkmale auf das zuvor genannte Verfahren übertragbar sind. Dies gilt natürlich auch umgekehrt.

Die Beschreibung der vorliegenden Systeme und/oder Verfahren haben lediglich veranschaulichenden Charakter; sie ist nicht als eine Einschränkung der beiliegenden Ansprüche auf eine bestimmte Ausführungsform oder Gruppe von Ausführungsformen zu verstehen. Bei der Interpretation der beiliegenden Ansprüche gilt, dass das Wort "umfassend" das Vorhandensein anderer Elemente oder Aktionen als diejenigen, die in einem bestimmten Anspruch aufgeführt sind, nicht ausschließt; das Wort "ein" oder "einer/eine/eines", das einem Element vorausgeht, soll das Vorhandensein einer Mehrzahl solche Elemente nicht ausschließen; jegliche Bezugszeichen in den Ansprüchen schränken ihren Umfang nicht ein; mehrere "Mittel" können durch denselben Gegenstand bzw. unterschiedliche Gegenstände oder implementierte Struktur oder Funktion dargestellt werden. In dieser Beschreibung sind Wörter wie "im Wesentlichen", "ungefähr" oder "im Allgemeinen/allgemein" dahingehend auszulegen, dass sie mindestens Abweichungen eines Maßes von 10 % oder weniger, vorzugsweise 5 % oder weniger, oder Abweichungen von einer Form beinhalten, die für einen Fachmann auf dem Gebiet noch in den Rahmen der betreffenden Definition fallen würden, außer dies ist anderweitig spezifiziert.

### Bezugszeichenliste

- 1: Fahrradrahmen
- 2: Vorderradgabel
- 3: Vorderrad
- 5: Sitzstrebe
- 6: Hinterrad
- 7: Kettenstrebe
- 90: Bremsscheibe
- 92: Signalgeberbasis bzw. Messring
- 93: Umrandung
- 94: Erhebung
- 96: Sensormittel
- 98: Eichelement
- 100: Fahrrad
- 210: Signalgebermittel
- 212: Signalgeber
- 214: Signalstrecke
- 215: Plateaufläche
- 218: Signalstrecke
- 220: vorauslaufende Kante
- 230: nachlaufende Kante
- 240: Längsseite
- 250: Stirnseitenwand
- 302: Controller bzw. Tacho
- Ax: Achse
- Es: Ebene
- a, β, γ: Rotationswinkel
- δ: Verzugswinkel
- R: Rotationsrichtung

## Patentansprüche

1. Inkrementelles Messwegesystem für ein Fahrrad (100), zur Ermittlung einer Rotationsgeschwindigkeit eines Rades (3) des Fahrrades (100) relativ zu einem Fixpunkt am Fahrrad (100), beispielsweise einer Gabel (2) und/oder einem Rahmen (1), umfassend wenigstens ein Signalgebermittel (210) mit einer Mehrzahl an Signalgebern (212), und wenigstens ein mit diesen Signalgebern (212) kooperierendes Sensorelement (96), wobei das Signalgebermittel (210) am Rad (3) und das Sensorelement (96) am Fixpunkt (2), oder umgekehrt, derart anordbar sind, dass bei einer Rotation des Rades (3) die Signalgeber (212) zur Abtastung wenigstens einer Signalstrecke (214, 218) und Bildung wenigstens eines abgreifbaren Messsignals am Sensorelement (96) vorbeirotieren, wobei
die Signalgeber (212) in einer Signalgeberebene (Es) angeordnet sind, und wenigstens einer der Signalgeber (212), optional genau einer der Signalgeber, als Eichelement (98) ausgebildet ist, umfassend wenigstens eine Signalstrecke (218), die von den Signalstrecken (214) der anderen Signalgeber (212) abweichend ausgebildet ist,
wobei jeder Signalgeber (212) eine vorauslaufende Kante (220) und eine nachlaufende Kante (230) aufweist, wobei die vorauslaufende Kante (220) den Beginn der Signalstrecke (214; 218) und die nachlaufende Kante (230) das Ende der Signalstrecke (214; 218) des Signalgebers (212) definiert,
wobei jeder Signalgeber (212) im Bereich seiner Signalstrecke zwischen der vorauslaufenden Kante (220) und der nachlaufenden Kante (230) opak ausgebildet ist,
wobei die Signalgeber (212) auf einer Signalgeberbasis (92) angeordnet sind, die eine Achse (Aₓ) umfasst, die derart anordbar ist, dass sie koaxial zur Rotationsachse des Rades (3) verläuft, und
wobei die Signalstrecke (218) des Eichelementes (98) kürzer oder länger ist als die Signalstrecken (214) der anderen Signalgeber (212),
**dadurch gekennzeichnet, dass**
die nachlaufende Kante (230) jedes einzelnen Signalgebers (212) von der vorauslaufenden Kante (220) des darauf in einer Umfangsrichtung der Signalgeberbasis (92) folgenden Signalgebers (212) in der Umfangsrichtung der Signalgeberbasis (92) beabstandet ist, so dass sämtliche einzelne Signalgeber (212) in der Umfangsrichtung der Signalgeberbasis (92) voneinander beabstandet sind,
wobei, aus der Detektion der Signalstrecke (218) des Eichelementes (98) durch das Sensorelement (96), ein verlässlicher Rückschluss auf die tatsächliche Rotationsgeschwindigkeit des Rades und ein sicherer Manipulationsschutz resultiert.

2. Inkrementelles Messwegesystem nach Anspruch 1,
**dadurch gekennzeichnet, dass**
die Signalgeber (212) und das Sensorelement (96) als Näherungsschalter ausgebildet sind, und insbesondere als ein Näherungsschalter aus der Gruppe umfassend induktive Näherungsschalter, kapazitive Näherungsschalter, magnetische Näherungsschalter, optische Näherungsschalter, Lichtschranken oder Ultraschall-Näherungsschalter.

3. Inkrementelles Messwegesystem nach einem der vorhergehenden Ansprüche, **dadurch gekennzeichnet, dass**
die Signalstrecke (218) des Eichelementes (98) unter den anderen Signalstrecken (214) eindeutig identifizierbar ausgebildet ist.

4. Inkrementelles Messwegesystem nach einem der vorhergehenden Ansprüche, **dadurch gekennzeichnet, dass**
die Signalstrecken (214) der anderen Signalgeber (212) identisch sind.

5. Inkrementelles Messwegesystem nach einem der vorhergehenden Ansprüche, **dadurch gekennzeichnet, dass** jeder Signalgeber (212) wenigstens eine aus der Signalgeberebene (Es) der Signalgeberbasis (92) hervorstehende Erhebung (94) aufweist.

6. Inkrementelles Messwegesystem nach Anspruch 5,
**dadurch gekennzeichnet, dass**
die wenigstens eine Erhebung (94) in einer zum Sensorelement (96) weisenden oder von dieser wegweisenden Richtung verläuft.

7. Inkrementelles Messwegesystem nach einem der vorhergehenden Ansprüche 5 oder 6,
**dadurch gekennzeichnet, dass**
die wenigstens eine Erhebung (94) als eine Plateauerhebung, insbesondere mit wenigstens einer zur Signalgeberebene (Es) der Signalgeberbasis (92) coplanaren Plateaufläche (215) ausgebildet ist.

8. Inkrementelles Messwegesystem nach einem der vorhergehenden Ansprüche 5 - 7,
**dadurch gekennzeichnet, dass**
die wenigstens eine Erhebung (94) in die Signalgeberbasis (92) eingeprägt ist.

9. Inkrementelles Messwegesystem nach einem der vorhergehenden Ansprüche 5 - 8,
**dadurch gekennzeichnet, dass**
die wenigstens eine Erhebung (94) die jeweilige vorauslaufende Kante (220) und/oder die jeweilige nachlaufende Kante (230) aufweist, wobei diese aus der Signalgeberbasis (92) herausgeknickt, ausgestanzt oder dergleichen eingeschnitten ist und/oder wenigstens abschnittsweise nicht mit der Signalgeberbasis (92) verbunden ist.

10. Inkrementelles Messwegesystem nach einem der vorhergehenden Ansprüche 5 - 9,
**dadurch gekennzeichnet, dass**
die wenigstens eine Erhebung (94) über wenigstens eine im Wesentlichen in Längsrichtung der Signalgeberbasis (92) verlaufende Längsseite (240) mit der Signalgeberbasis (92) verbunden ist.

11. Inkrementelles Messwegesystem nach Anspruch 10,
**dadurch gekennzeichnet, dass**
die wenigstens eine Längsseite (240) bogenförmig ausgeformt ist.

12. Inkrementelles Messwegesystem nach einem der vorhergehenden Ansprüche, **dadurch gekennzeichnet, dass**
die vorauslaufende Kante (220) und/oder die nachlaufende Kante (230) jedes Signalgebers (212) an eine jeweilige Stirnseitenwand (250) angrenzen, die in einer von der Signalgeberebene (Es) abweichenden und insbesondere orthogonal dazu verlaufenden Ebene verläuft.

13. Inkrementelles Messwegesystem nach einem der vorhergehenden Ansprüche, **dadurch gekennzeichnet, dass**
die vorauslaufende Kante (220) und/oder die nachlaufende Kante (230) jedes Signalgebers (212) in Signalgeberebene (Es) betrachtet als Geraden ausgebildet sind.

14. Inkrementelles Messwegesystem nach einem der vorhergehenden Ansprüche, **dadurch gekennzeichnet, dass**
die vorauslaufende Kante (220) und/oder die nachlaufende Kante (230) jedes Signalgebers (212) in Signalgeberebene (Es) bezogen auf eine Radialrichtung des Rades um einen Verzugswinkel δ > 5°, optional δ > 10° verschwenkt verlaufend angeordnet sind.

15. Signalgebermittel (210) für ein inkrementelles Messwegesystem nach Anspruch 1, mit einer Mehrzahl an Signalgebern (212), wobei das Signalgebermittel (210) an einem Rad (3) eines Fahrrades (100) oder einem Fixpunkt (2) am Fahrrad derart anordbar ist, dass bei einer Rotation des Rades (3) die Signalgeber (212) zur Abtastung wenigstens einer Signalstrecke (214, 218) und Bildung wenigstens eines abgreifbaren Messsignals an einem Sensorelement (96) am Fahrrad (100) vorbeirotieren,
wobei die Signalgeber (212) in einer Signalgeberebene (Es) angeordnet sind, und wenigstens einer der Signalgeber (212), optional genau einer der Signalgeber, als Eichelement (98) ausgebildet ist, umfassend wenigstens eine Signalstrecke (218) die von den Signalstrecken (214) der anderen Signalgeber (212) abweichend ausgebildet ist,
wobei jeder Signalgeber (212) eine vorauslaufende Kante (220) und eine nachlaufende Kante (230) aufweist, wobei die vorauslaufende Kante (220) den Beginn der Signalstrecke (214; 218) und die nachlaufende Kante (230) das Ende der Signalstrecke (214; 218) des Signalgebers (212) definiert,
wobei jeder Signalgeber (212) im Bereich seiner Signalstrecke zwischen der vorauslaufenden Kante (220) und der nachlaufenden Kante (230) opak ausgebildet ist,
wobei die Signalgeber (212) auf einer Signalgeberbasis (92) angeordnet sind, die eine Achse (Aₓ) umfasst, die derart anordbar ist, dass sie koaxial zur Rotationsachse des Rades (3) verläuft,
und wobei die Signalstrecke (218) des Eichelementes (98) kürzer oder länger ist als die Signalstrecken (214) der anderen Signalgeber (212),
**dadurch gekennzeichnet, dass**
die nachlaufende Kante (230) jedes einzelnen Signalgebers (212) von der vorauslaufenden Kante (220) des darauf in einer Umfangsrichtung der Signalgeberbasis (92) folgenden Signalgebers (212) in der Umfangsrichtung der Signalgeberbasis (92) beabstandet ist, so dass sämtliche einzelnen Signalgeber (212) in der Umfangsrichtung der Signalgeberbasis (92) voneinander beabstandet sind,
wobei, aus der Detektion der Signalstrecke (218) des Eichelementes (98) durch das Sensorelement (96), ein verlässlicher Rückschluss auf die tatsächliche Rotationsgeschwindigkeit des Rades und ein sicherer Manipulationsschutz resultiert.

16. Verfahren zur Herstellung eines Signalgebermittels (210) für ein inkrementelles Messwegesystem nach einem der vorhergehenden Ansprüche 1 - 14, umfassend die folgenden Schritte:
• Bereitstellen einer Signalgeberbasis (92);
• Ausbilden und insbesondere Einprägen einer Mehrzahl an Signalgebern (212) in die Signalgeberbasis (92), jeweils umfassend wenigstens eine von einem Sensorelement (96) abtastbare Signalstrecke (214, 218), wobei wenigstens einer der Signalgeber (212), optional genau einer der Signalgeber, als Eichelement (98) ausgebildet wird, umfassend wenigstens eine Signalstrecke (218) die von den Signalstrecken (214) der anderen Signalgeber (212) abweichend ausgebildet ist,
wobei jeder Signalgeber (212) eine vorauslaufende Kante (220) und
eine nachlaufende Kante (230) aufweist,
wobei die vorauslaufende Kante (220) den Beginn der Signalstrecke (214; 218) und die nachlaufende Kante (230) das Ende der Signalstrecke (214; 218) des Signalgebers (212) definiert,
wobei jeder Signalgeber (212) im Bereich seiner Signalstrecke zwischen der vorauslaufenden Kante (220) und der nachlaufenden Kante (230) opak ausgebildet ist,
wobei die Signalgeber (212) auf der Signalgeberbasis (92) angeordnet sind, die eine Achse (Aₓ) umfasst, die derart anordbar ist, dass sie koaxial zur Rotationsachse eines Rades (3) eines Fahrrades verläuft,
wobei die Signalstrecke (218) des Eichelementes (98) kürzer oder länger ist als die Signalstrecken (214) der anderen Signalgeber (212),
wobei die nachlaufende Kante (230) jedes einzelnen Signalgebers (212) von der vorauslaufenden Kante (220) des darauf in einer Umfangsrichtung der Signalgeberbasis (92) folgenden Signalgebers (212) in der Umfangsrichtung der Signalgeberbasis (92) beabstandet ist, so dass sämtliche einzelnen Signalgeber (212) in der Umfangsrichtung der Signalgeberbasis (92) voneinander beabstandet sind,
und wobei, aus der Detektion der Signalstrecke (218) des Eichelementes (98) durch das Sensorelement (96), ein verlässlicher Rückschluss auf die tatsächliche Rotationsgeschwindigkeit des Rades und ein sicherer Manipulationsschutz resultiert.

17. Fahrrad umfassend einen Fahrradrahmen (10), wenigstens ein an diesem Fahrradrahmen rotierbar gelagertes Rad (3) und ein inkrementelles Messwegesystem nach einem der vorhergehenden Ansprüche 1- 14.

## Claims

1. Incremental measuring path system for a bicycle (100), for determining a rotational speed of a wheel (3) of the bicycle (100) relative to a fixed point on the bicycle (100), for example a fork (2) and/or a frame (1), comprising at least one signal transmitter means (210) with a plurality of signal transmitters (212), and at least one sensor element (96) cooperating with these signal transmitters (212), wherein the signal transmitter means (210) can be arranged on the wheel (3) and the sensor element (96) can be arranged on the fixed point (2), or vice versa, in such a way that, during a rotation of the wheel (3), the signal transmitters (212) rotate past the sensor element (96) in order to scan at least one signal path (214, 218) and form at least one tappable measurement signal, wherein
the signal transmitters (212) are arranged in a signal transmitter plane (Es), and at least one of the signal transmitters (212), optionally exactly one of the signal transmitters, is designed as a calibration element (98) comprising at least one signal path (218) which is designed differently from the signal paths (214) of the other signal transmitters (212),
wherein each signal transmitter (212) has a leading edge (220) and a trailing edge (230), wherein the leading edge (220) defines the beginning of the signal path (214; 218) and the trailing edge (230) defines the end of the signal path (214; 218) of the signal transmitter (212),
wherein each signal transmitter (212) is opaque in the region of its signal path between the leading edge (220) and the trailing edge (230),
wherein the signal transmitters (212) are arranged on a signal transmitter base (92) comprising an axis (Ax) which can be arranged to be coaxial with the axis of rotation of the wheel (3), and
wherein the signal path (218) of the calibration element (98) is shorter or longer than the signal paths (214) of the other signal transmitters (212),
**characterized in that**
the trailing edge (230) of each individual signal transmitter (212) is spaced apart from the leading edge (220) of the signal transmitter (212) following it in a circumferential direction of the signal transmitter base (92) in the circumferential direction of the signal transmitter base (92), so that all individual signal generators (212) are spaced apart from each other in the circumferential direction of the signal transmitter base (92), wherein, from the detection of the signal path (218) of the calibration element (98) by the sensor element (96), a reliable conclusion can be reached about the actual rotational speed of the wheel and this results in a secure protection against manipulation.

2. Incremental measuring path system according to claim 1, **characterized in that**
the signal transmitter (212) and the sensor element (96) are designed as proximity switches, and in particular as a proximity switch from the group comprising inductive proximity switches, capacitive proximity switches, magnetic proximity switches, optical proximity switches, light barriers or ultrasonic proximity switches.

3. Incremental measuring path system according to any one of the preceding claims, **characterized in that**
the signal path (218) of the calibration element (98) is uniquely identifiable among the other signal paths (214).

4. Incremental measuring path system according to any one of the preceding claims, **characterized in that**
the signal paths (214) of the other signal transmitters (212) are identical.

5. Incremental measuring path system according to any one of the preceding claims, **characterized in that**
each signal transmitter (212) has at least one elevation (94) protruding from the signal transmitter plane (Es) of the signal transmitter base (92).

6. Incremental measuring path system according to claim 5,
**characterized in that**
the at least one elevation (94) extends in a direction facing towards or away from the sensor element (96).

7. Incremental measuring path system according to any one of the preceding claims 5 or 6,
**characterized in that**
the at least one elevation (94) is designed as a plateau elevation, in particular with at least one plateau surface (215) coplanar with the signal transmitter plane (Es) of the signal transmitter base (92).

8. Incremental measuring path system according to any one of the preceding claims 5 - 7,
**characterized in that**
the at least one elevation (94) is embossed in the signal transmitter base (92).

9. Incremental measuring path system according to any one of the preceding claims 5 - 8,
**characterised in that**
the at least one elevation (94) has the respective leading edge (220) and/or the respective trailing edge (230), wherein the signal transmitter base (92) is bent, punched or the like and/or is not connected to the signal transmitter base (92) at least in sections.

10. Incremental measuring path system according to any one of the preceding claims 5 - 9,
**characterized in that**
the at least one elevation (94) is connected to the signal transmitter base (92) via at least one longitudinal side (240) extending substantially in the longitudinal direction of the signal transmitter base (92).

11. Incremental measuring path system according to claim 10, **characterized in that**
the at least one longitudinal side (240) is shaped in an arc.

12. Incremental measuring path system according to any one of the preceding claims, **characterized in that**
the leading edge (220) and/or the trailing edge (230) of each signal transmitter (212) adjoin a respective end wall (250) which extends in a plane deviating from the signal transmitter plane (Es) and in particular extending orthogonally thereto.

13. Incremental measuring path system according to any one of the preceding claims, **characterized in that**
the leading edge (220) and/or the trailing edge (230) of each signal transmitter (212) are formed as straight lines when viewed in the signal transmitter plane (Es).

14. Incremental measuring path system according to any one of the preceding claims, **characterized in that**
the leading edge (220) and/or the trailing edge (230) of each signal transmitter (212) are arranged in the signal transmitter plane (Es) so as to extend pivoted by a distortion angle of δ > 5°, optionally δ > 10° with respect to a radial direction of the wheel.

15. Signal transmitter means (210) for an incremental measuring path system according to claim 1, comprising a plurality of signal transmitters (212), wherein the signal transmitter means (210) can be arranged on a wheel (3) of a bicycle (100) or a fixed point (2) on the bicycle in such a way that, when the wheel (3) rotates, the signal transmitters (212) rotate past a sensor element (96) on the bicycle (100) in order to scan at least one signal path (214, 218) and form at least one tappable measurement signal, wherein the signal transmitters (212) are arranged in a signal transmitter plane (Es), and at least one of the signal transmitters (212), optionally exactly one of the signal transmitters, is formed as a calibration element (98), comprising at least one signal path (218) which is formed differently from the signal paths (214) of the other signal transmitters (212),
wherein each signal transmitter (212) has a leading edge (220) and a trailing edge (230), wherein the leading edge (220) defines the beginning of the signal path (214; 218) and the trailing edge (230) defines the end of the signal path (214; 218) of the signal transmitter (212),
wherein each signal transmitter (212) is opaque in the region of its signal path between the leading edge (220) and the trailing edge (230),
wherein the signal transmitters (212) are arranged on a signal transmitter base (92) comprising an axis (Ax) which can be arranged to be coaxial with the axis of rotation of the wheel (3),
and wherein the signal path (218) of the calibration element (98) is shorter or longer than the signal paths (214) of the other signal transmitters (212), **characterized in that**
the trailing edge (230) of each individual signal transmitter (212) is spaced apart from the leading edge (220) of the signal transmitter (212) following it in a circumferential direction of the signal transmitter base (92) in the circumferential direction of the signal transmitter base (92), so that all individual signal transmitters (212) are spaced apart from each other in the circumferential direction of the signal transmitter base (92), wherein, from the detection of the signal path (218) of the calibration element (98) by the sensor element (96), a reliable conclusion can be reached about the actual rotational speed of the wheel and this results in a secure protection against manipulation.

16. Method of manufacturing a signal transmitter means (210) for an incremental measuring path system according to any one of the preceding claims 1 - 14, comprising the following steps:
• Providing a signal transmitter base (92);
• Forming and in particular embossing a plurality of signal transmitters (212) into the signal transmitter base (92), each comprising at least one signal path (214, 218) which can be scanned by a sensor element (96), wherein at least one of the signal transmitters (212), optionally exactly one of the signal transmitters, is formed as a calibration element (98), comprising at least one signal path (218) which is formed differently from the signal paths (214) of the other signal transmitters (212), wherein each signal transmitter (212) has a leading edge (220) and a trailing edge (230),
wherein the leading edge (220) defines the beginning of the signal path (214; 218) and the trailing edge (230) defines the end of the signal path (214; 218) of the signal transmitter (212),
wherein each signal transmitter (212) is opaque in the region of its signal path between the leading edge (220) and the trailing edge (230),
wherein the signal transmitters (212) are arranged on the signal transmitter base (92) which comprises an axis (Ax) that can be arranged to be coaxial with the axis of rotation of a wheel (3) of a bicycle, wherein the signal path (218) of the calibration element (98) is shorter or longer than the signal paths (214) of the other signal transmitters (212), wherein the trailing edge (230) of each individual signal transmitter (212) is spaced apart from the leading edge (220) of the signal transmitter (212) following it in a circumferential direction of the signal transmitter base (92) in the circumferential direction of the signal transmitter base (92), so that all individual signal transmitters (212) are spaced apart from each other in the circumferential direction of the signal transmitter base (92), and wherein, from the detection of the signal path (218) of the calibration element (98) by the sensor element (96), a reliable conclusion can be reached about the actual rotational speed of the wheel and results in a secure protection against manipulation.

17. Bicycle comprising a bicycle frame (10), at least one wheel (3) rotatably mounted on said bicycle frame and an incremental measuring path system according to any of the preceding claims 1- 14.

## Revendications

1. Système de mesure incrémental pour une bicyclette (100), destiné à déterminer une vitesse de rotation d'une roue (3) de la bicyclette (100) par rapport à un point fixe sur la bicyclette (100), par exemple une fourche (2) et/ou un cadre (1), comprenant au moins un moyen émetteur de signal (210) avec une pluralité d'émetteurs de signaux (212), et au moins un élément capteur (96) coopérant avec ces émetteurs de signaux (212), le moyen émetteur de signal (210) pouvant être disposé sur la roue (3) et l'élément capteur (96) pouvant être disposé sur le point fixe (2) ou inversement, de manière à ce que lors d'une rotation de la roue (3), les émetteurs de signaux (212) passent par rotation devant l'élément capteur (96), aux fins de balayer au moins un trajet de signaux (214, 218) et de former au moins un signal de mesure susceptible d'être prélevé, sachant que
les émetteurs de signaux (212) sont disposés dans un plan d'émetteurs de signaux (E_{S}), et au moins un des émetteurs de signaux (212), de manière facultative exactement un des émetteurs de signaux, est réalisé comme élément d'étalonnage (98) comprenant au moins un trajet de signaux (218) qui est réalisé de manière différente par rapport aux trajets de signaux (214) des autres émetteurs de signaux (212),
sachant que chaque émetteur de signal (212) présente un bord avant (220) et un bord arrière (230), le bord avant (220) définissant le début du trajet de signaux (214 ; 218) et le bord arrière (230) définissant la fin du trajet de signaux (214 ; 218) de l'émetteur de signal (212),
sachant que chaque émetteur de signal (212) est réalisé de manière opaque dans la région de son trajet de signaux entre le bord avant (220) et le bord arrière (230),
sachant que les émetteurs de signaux (212) sont disposés sur une base d'émetteurs de signaux (92) qui comprend un axe (Aₓ) pouvant être positionné de manière à s'étendre coaxialement avec l'axe de rotation de la roue (3), et
sachant que le trajet de signaux (218) de l'élément d'étalonnage (98) est plus court ou plus long que les trajets de signaux (214) des autres émetteurs de signaux (212),
**caractérisé en ce que**
le bord arrière (230) de chaque émetteur de signal (212) individuel est espacé, dans la direction périphérique de la base d'émetteurs de signaux (92), du bord avant (220) de l'émetteur de signal (212) qui suit dans une direction périphérique de la base d'émetteurs de signaux (92), de sorte que tous les émetteurs de signaux (212) individuels sont espacés les uns des autres dans la direction périphérique de la base d'émetteurs de signaux (92),
la détection du trajet de signaux (218) de l'élément d'étalonnage (98) par l'élément capteur (96) permettant d'aboutir à une conclusion fiable concernant la vitesse de rotation réelle de la roue et d'établir une protection sûre contre les manipulations.

2. Système de mesure incrémental selon la revendication 1, **caractérisé en ce que** les émetteurs de signaux (212) et l'élément capteur (96) sont réalisés sous forme de détecteurs de proximité, et notamment comme détecteur de proximité du groupe comprenant des détecteurs de proximité inductifs, des détecteurs de proximité capacitifs, des détecteurs de proximité magnétiques, des détecteurs de proximité optiques, des barrières photoélectriques ou des détecteurs de proximité à ultrasons.

3. Système de mesure incrémental selon l'une des revendications, précédentes, **caractérisé en ce que** le trajet de signaux (218) de l'élément d'étalonnage (98) est réalisé de manière à pouvoir être identifié de façon univoque parmi les autres trajets de signaux (214).

4. Système de mesure incrémental selon l'une des revendications précédentes, **caractérisé en ce que** les trajets de signaux (214) des autres émetteurs de signaux (212) sont identiques.

5. Système de mesure incrémental selon l'une des revendications précédentes, **caractérisé en ce que** chaque émetteur de signal (212) présente au moins une surélévation (94) qui dépasse par rapport au plan d'émetteurs de signaux (E_{S}) de la base d'émetteurs de signaux (92).

6. Système de mesure incrémental selon la revendication 5, **caractérisé en ce que** la surélévation (94), au nombre d'au moins une, s'étend dans une direction orientée vers l'élément capteur (96) ou dans le sens opposé.

7. Système de mesure incrémental selon l'une des revendications précédentes 5 ou 6, **caractérisé en ce que** la surélévation (94), au nombre d'au moins une, est réalisée sous la forme d'une surélévation en plateau, notamment avec au moins une surface de plateau (215) qui est coplanaire avec le plan d'émetteurs de signaux (Es) de la base d'émetteurs de signaux (92).

8. Système de mesure incrémental selon l'une des revendications précédentes 5 à 7, **caractérisé en ce que** la surélévation (94), au nombre d'au moins une, est estampée dans la base d'émetteurs de signaux (92).

9. Système de mesure incrémental selon l'une des revendications précédentes 5 à 8, **caractérisé en ce que** la surélévation (94), au nombre d'au moins une, présente le bord avant (220) respectif et/ou le bord arrière (230) respectif, ledit bord étant formé par pliage, découpe ou par un procédé analogue dans la base d'émetteurs de signaux (92) et/ou n'étant pas relié au moins dans certaines portions à la base d'émetteurs de signaux (92).

10. Système de mesure incrémental selon l'une des revendications précédentes 5 à 9, **caractérisé en ce que** la surélévation (94), au nombre d'au moins une, est reliée à la base d'émetteurs de signaux (92) par au moins un côté longitudinal (240) s'étendant sensiblement dans le sens longitudinal de la base d'émetteurs de signaux (92).

11. Système de mesure incrémental selon la revendication 10, **caractérisé en ce que** le côté longitudinal (240), au nombre d'au moins un, est réalisé en forme d'arc.

12. Système de mesure incrémental selon l'une des revendications précédentes, **caractérisé en ce que** le bord avant (220) et/ou le bord arrière (230) de chaque émetteur de signal (212) est/sont adjacent(s) à une paroi latérale frontale (250) respective s'étendant dans un plan qui est différent du plan d'émetteurs de signaux (Es) et est notamment orthogonal à celui-ci.

13. Système de mesure incrémental selon l'une des revendications précédentes, **caractérisé en ce que** le bord avant (220) et/ou le bord arrière (230) de chaque émetteur de signal (212) est/sont réalisé(s) sous forme de droite(s), vu dans le plan d'émetteurs de signaux (E_{S}).

14. Système de mesure incrémental selon l'une des revendications précédentes, **caractérisé en ce que** le bord avant (220) et/ou le bord arrière (230) de chaque émetteur de signal (212) est/sont disposé(s) dans le plan d'émetteurs de signaux (Es) en étant pivoté(s) d'un angle d'inclinaison δ > 5°, de manière facultative δ > 10°, par rapport à une direction radiale de la roue.

15. Moyen émetteur de signal (210) destiné à un système de mesure incrémental selon la revendication 1, comprenant une pluralité d'émetteurs de signaux (212), le moyen émetteur de signal (210) pouvant être disposé sur une roue (3) d'une bicyclette (100) ou sur un point fixe (2) de la bicyclette, de manière à ce que lors d'une rotation de la roue (3), les émetteurs de signaux (212) passent par rotation devant un élément capteur (96) prévu sur la bicyclette (100), aux fins de balayer au moins un trajet de signaux (214, 218) et de former au moins un signal de mesure susceptible d'être prélevé,
sachant que les émetteurs de signaux (212) sont disposés dans un plan d'émetteurs de signaux (E_{S}), et au moins un des émetteurs de signaux (212), de manière facultative exactement un des émetteurs de signaux, est réalisé comme élément d'étalonnage (98) comprenant au moins un trajet de signaux (218) qui est réalisé de manière différente par rapport aux trajets de signaux (214) des autres émetteurs de signaux (212),
sachant que chaque émetteur de signal (212) présente un bord avant (220) et un bord arrière (230), le bord avant (220) définissant le début du trajet de signaux (214 ; 218) et le bord arrière (230) définissant la fin du trajet de signaux (214 ; 218) de l'émetteur de signal (212),
sachant que chaque émetteur de signal (212) est réalisé de manière opaque dans la région de son trajet de signaux entre le bord avant (220) et le bord arrière (230),
sachant que les émetteurs de signaux (212) sont disposés sur une base d'émetteurs de signaux (92) qui comprend un axe (Aₓ) pouvant être positionné de manière à s'étendre coaxialement avec l'axe de rotation de la roue (3),
et sachant que le trajet de signaux (218) de l'élément d'étalonnage (98) est plus court ou plus long que les trajets de signaux (214) des autres émetteurs de signaux (212),
**caractérisé en ce que**
le bord arrière (230) de chaque émetteur de signal (212) individuel est espacé, dans la direction périphérique de la base d'émetteurs de signaux (92), du bord avant (220) de l'émetteur de signal (212) qui suit dans une direction périphérique de la base d'émetteurs de signaux (92), de sorte que tous les émetteurs de signaux (212) individuels sont espacés les uns des autres dans la direction périphérique de la base d'émetteurs de signaux (92),
la détection du trajet de signaux (218) de l'élément d'étalonnage (98) par l'élément capteur (96) permettant d'aboutir à une conclusion fiable concernant la vitesse de rotation réelle de la roue et d'établir une protection sûre contre les manipulations.

16. Procédé de fabrication d'un moyen émetteur de signal (210) destiné à un système de mesure incrémental selon l'une des revendications précédentes 1 à 14, comprenant les étapes suivantes :
• mise à disposition d'une base d'émetteurs de signaux (92) ;
• réalisation et notamment estampage d'une pluralité d'émetteurs de signaux (212) dans la base d'émetteurs de signaux (92), comprenant chacun au moins un trajet de signaux (214, 218) pouvant être exploré par l'élément capteur (96), sachant qu'au moins un des émetteurs de signaux (212), de manière facultative exactement un des émetteurs de signaux, est réalisé comme élément d'étalonnage (98) comprenant au moins un trajet de signaux (218) qui est réalisé de manière différente par rapport aux trajets de signaux (214) des autres émetteurs de signaux (212),
sachant que chaque émetteur de signal (212) présente un bord avant (220) et un bord arrière (230),
le bord avant (220) définissant le début du trajet de signaux (214 ; 218) et le bord arrière (230) définissant la fin du trajet de signaux (214 ; 218) de l'émetteur de signal (212),
sachant que chaque émetteur de signal (212) est réalisé de manière opaque dans la région de son trajet de signaux entre le bord avant (220) et le bord arrière (230),
sachant que les émetteurs de signaux (212) sont disposés sur la base d'émetteurs de signaux (92) qui comprend un axe (Aₓ) pouvant être positionné de manière à s'étendre coaxialement avec l'axe de rotation d'une roue (3) d'une bicyclette,
sachant que le trajet de signaux (218) de l'élément d'étalonnage (98) est plus court ou plus long que les trajets de signaux (214) des autres émetteurs de signaux (212),
le bord arrière (230) de chaque émetteur de signal (212) individuel étant espacé, dans la direction périphérique de la base d'émetteurs de signaux (92), du bord avant (220) de l'émetteur de signal (212) qui suit dans une direction périphérique de la base d'émetteurs de signaux (92), de sorte que tous les émetteurs de signaux (212) individuels sont espacés les uns des autres dans la direction périphérique de la base d'émetteurs de signaux (92), et la détection du trajet de signaux (218) de l'élément d'étalonnage (98) par l'élément capteur (96) permettant d'aboutir à une conclusion fiable concernant la vitesse de rotation réelle de la roue et d'établir une protection sûre contre les manipulations.

17. Bicyclette comprenant un cadre de bicyclette (10), au moins une roue (3) montée avec possibilité de rotation sur ce cadre de bicyclette, et un système de mesure incrémental selon l'une des revendications précédentes 1 à 14.
